# EUROPEAN PATENT APPLICATION

(11) **EP 4 468 618 A1**
(43) Date of publication of application: **27.11.2024**
(21) Application number: 22919532.6
(22) Date of filing: 17.01.2022
(51) Int. Cl.: H04B 7/06

(54) **CHANNEL INFORMATION FEEDBACK METHOD, SENDING END DEVICE, AND RECEIVING END DEVICE**

(71) Applicant: GUANGDONG OPPO MOBILE TELECOMMUNICATIONS CORP., LTD., Dongguan, Guangdong 523860 (CN)
(72) Inventor: LIU, Wendong, Dongguan, Guangdong 523860 (CN)
(74) Representative: RGTH
(86) International application number: PCT/CN2022/072338
(87) International publication number: WO 2023/133886

(57) **Abstract**

A method for channel information feedback, a transmitting device, and a receiving device are provided by the embodiments of the present application, and CSI feedback can support a flexible antenna port and sub-band configuration. The method for channel information feedback includes: encoding by a transmitting device, target channel information through an encoding network, to obtain a target bitstream; and transmitting by the transmitting device, the target bitstream to a receiving device; the encoding network is formed by aggregating K encoding units, the target bit stream includes K sub-bitstreams outputted by the K encoding units respectively, K is a positive integer, and K^2; the target channel information is a CSI matrix, and an input of an encoding unit of the K encoding units is a sub-matrix of the target channel information in a first dimension and/or a second dimension; or, the target channel information is a CSI vector, and an input of an encoding unit of the K encoding units is a sub-vector of the target channel information in a first dimension and/or a second dimension; the first dimension is a number of transmitting antenna ports and the second dimension is a number of sub-bands.

## Description

### TECHNICAL FIELD

Embodiments of the present application relate to the field of communication, and in particular, to a method for channel information feedback, a transmitting device, and a receiving device.

### BACKGROUND

In a New Radio (NR) system, channel state information (CSI) may be fed back based on a codebook, and specifically, an optimal feedback matrix and a corresponding feedback coefficient are selected from the codebook by using an estimated channel, periodically, aperiodically, or semi-persistently, according to a higher signaling configuration. However, since the codebook itself is a pre-set finite set, that is, a mapping procedure from the estimated channel to the channel in the codebook is quantitatively lossy. At the same time, the fixed codebook design cannot be dynamically adjusted according to the change of the channel, which reduces the accuracy of the fed-back channel information and further reduces the performance of precoding.

### SUMMARY

The embodiments of the present application provide a method for channel information feedback, a transmitting device, and a receiving device, CSI feedback can support a flexible configuration of antenna ports and sub-bands, and there is no need to construct large data sets and train a corresponding model for each configuration of antenna ports and sub-bands. Only encoding units and decoding units with a few configurations of antenna ports and sub-bands need to be constructed, and a variety of configurations of antenna ports and sub-bands may be combined, by forming an encoding network by aggregating the encoding units and forming a decoding network by aggregating the decoding units.

In a first aspect, a method for channel information feedback is provided, and the method includes:
encoding by a transmitting device, target channel information through an encoding network, to obtain a target bitstream; and
transmitting by the transmitting device, the target bitstream to a receiving device;
where the encoding network is formed by aggregating K encoding units, the target bit stream includes K sub-bitstreams outputted by the K encoding units respectively, K is a positive integer, and K^2;
where the target channel information is a CSI matrix, and an input of an encoding unit of the K encoding units is a sub-matrix of the target channel information in a first dimension and/or a second dimension; or, the target channel information is a CSI vector, and an input of an encoding unit of the K encoding units is a sub-vector of the target channel information in a first dimension and/or a second dimension; the first dimension is a number of transmitting antenna ports and the second dimension is a number of sub-bands.

In a second aspect, a method for channel information feedback is provided, and the method includes:
receiving by a receiving device, a target bitstream transmitted by a transmitting device, where the target bitstream includes K sub-bitstreams output by K encoding units respectively; and
decoding by the receiving device, the target bitstream through a decoding network, to obtain target channel information;
where the decoding network is formed by aggregating K decoding units, the K decoding units correspond to the K encoding units respectively, and an input of a decoding unit of the K decoding units is a sub-bitstream output by a corresponding encoding unit, K is a positive integer, and K^2;
where the target channel information is a CSI matrix, and an output of the decoding unit of the K decoding units is a sub-matrix of the target channel information in a first dimension and/or a second dimension; or, the target channel information is a CSI vector, and an output of the decoding unit of the K decoding units is a sub-vector of the target channel information in a first dimension and/or a second dimension; the first dimension is a number of transmitting antenna ports, and the second dimension is a number of sub-bands.

In a third aspect, a transmitting device is provided for performing the method in the above first aspect.

Specifically, the transmitting device includes functional modules for performing the method in the above first aspect.

In a fourth aspect, a receiving device is provided for performing the method in the above second aspect.

Specifically, the receiving device includes functional modules for performing the method in the above second aspect.

In a fifth aspect, a transmitting device is provided, including a processor and a memory; the memory is configured to store a computer program, and the processor is configured to invoke and execute the computer program stored in the memory, to cause the transmitting device to perform the method in the above first aspect.

In a sixth aspect, a receiving device is provided, including a processor and a memory; the memory is configured to store a computer program, and the processor is configured to invoke and execute the computer program stored in the memory, to cause the receiving device to perform the method in the above second aspect.

In a seventh aspect, an apparatus is provided for implementing the method of any one of the above first aspect to the second aspect.

Specifically, the apparatus includes: a processor, configured to invoke and execute a computer program from a memory, to cause a device equipped with the apparatus to perform the method of any one of the above first aspect to the second aspect.

In an eighth aspect, a computer readable storage medium is provided, for storing a computer program, and the computer program causes a computer to perform the method of any one of the above first aspect to the second aspect.

In a ninth aspect, a computer program product is provided, including a computer program instruction, and the computer program instruction causes a computer to perform the method of any one of the above first aspect to the second aspect.

In a tenth aspect, a computer program is provided, and the computer program, when being executed on a computer, causes the computer to perform the method of any one of the above first aspect to the second aspect.

Through the above technical solutions, the encoding network is formed by aggregating K encoding units, the decoding network is formed by aggregating K decoding units, and the K encoding units correspond to the K decoding units one by one. The input of the encoding unit of the K encoding units is a sub-matrix or sub-vector of the target channel information in the first dimension and/or the second dimension, the input of the decoding unit of the K decoding units is a sub-bitstream output by the corresponding encoding unit, the output of the decoding unit of the K decoding units is a sub-matrix or sub-vector of the target channel information in the first dimension and/or the second dimension, and finally, the target channel information may be obtained by the sub-matrices or sub-vectors output by the K decoding units. That is, through the above technical solutions, the CSI feedback can support a flexible configuration of antenna ports and sub-bands, and may achieve flexible adaptation to configurations of different transmitting antenna ports and different sub-bands, and there is no need to construct large data sets and train a corresponding model for each configuration of antenna ports and sub-bands. In the embodiments of the present application, only encoding units and decoding units with a few configurations of antenna ports and sub-bands need to be constructed, and a variety of configurations of antenna ports and sub-bands may be combined, by forming the encoding network by aggregating the encoding units and forming the decoding network by aggregating the decoding units.

### BRIEF DESCRIPTION OF THE DRAWINGS

FIG. 1 is a schematic diagram of a communication system architecture, applied by the embodiments of the present application.
FIG. 2 is a schematic diagram of channel information feedback, provided by the present application.
FIG. 3 is a schematic interaction flowchart of a method for channel information feedback, provided according to the embodiments of the present application.
FIG. 4 is a schematic diagram of channel information feedback, provided according to the embodiments of the present application.
FIG. 5 is a schematic diagram of a CSI matrix, provided according to the embodiments of the present application.
FIG. 6 is a schematic diagram of a CSI vector, provided according to the embodiments of the present application.
FIG. 7 is a schematic diagram of another CSI vector, provided according to the embodiments of the present application.
FIG. 8 to FIG.14 are schematic diagrams of sub-matrices corresponding to encoding units, provided according to the embodiments of the present application, respectively.
FIG. 15 is a schematic flowchart of a model aggregation indication, provided according to the embodiments of the present application.
FIG. 16 is a schematic block diagram of a transmitting device, provided according to the embodiments of the present application.
FIG. 17 is a schematic block diagram of a receiving device, provided according to the embodiments of the present application.
FIG. 18 is a schematic block diagram of a communication device, provided according to the embodiments of the present application.
FIG. 19 is a schematic block diagram of an apparatus, provided according to the embodiments of the present application.
FIG. 20 is a schematic block diagram of a communication system, provided according to the embodiments of the present application.

### DETAILED DESCRIPTION

The technical solutions in the embodiments of the present application will be described in conjunction with the accompanying drawings in the embodiments of the present application. Apparently, the described embodiments are a part of the embodiments of the present application, but not all of the embodiments. For the embodiments of the present application, all other embodiments obtained by the ordinary skilled in the art without paying creative effort belong to the protection scope of the present application.

The technical solutions of the embodiments of the present application may be applied to various communication systems, such as: a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system of an NR system, an LTE-based access to unlicensed spectrum (LTE-U) system, an NR-based access to unlicensed spectrum (NR-U) system, a Non-Terrestrial communication Network (Non-Terrestrial Networks, NTN) system, a Universal Mobile Telecommunication System (UMTS), a Wireless Local Area Network (WLAN), an internet of things (IoT), a Wireless Fidelity (WiFi), a fifth-generation communication (5th-Generation, 5G) system, or other communication systems, etc.

Generally speaking, a number of connections supported by a traditional communication system is limited and is easy to implement, however, with the development of the communication technology, the mobile communication system will not only support the traditional communication, but also support, for example, Device to Device (D2D) communication, Machine to Machine (M2M) communication, Machine Type Communication (MTC), Vehicle to Vehicle (V2V) communication, or Vehicle to everything (V2X) communication, etc, and the embodiments of the present application may also be applied to these communication systems.

In some embodiments, the communication system in the embodiments of the present application may be applied to a carrier aggregation (CA) scenario, may also be applied to a dual connectivity (DC) scenario, and may also be applied to a standalone (SA) network deployment scenario, or applied to non-standalone (NSA) network deployment scenario.

In some embodiments, the communication system in the embodiments of the present application may be applied to an unlicensed spectrum, where the unlicensed spectrum may also be considered as a shared spectrum; or the communication system in the embodiments of the present application may also be applied to a licensed spectrum, where the licensed spectrum may also be considered as an unshared spectrum.

In some embodiments, the communication system in the embodiments of the present application may be applied to an FR1 frequency band (corresponding to a frequency band range of 410 MHz to 7.125 GHz), or may also be applied to an FR2 frequency band (corresponding to a frequency band range of 24.25 GHz to 52.6 GHz), or may also be applied to a new frequency band, such as a high frequency band corresponding to a frequency band range of 52.6 GHz to 71 GHz or corresponding to a frequency band range of 71 GHz to 114.25 GHz.

The embodiments of the present application describe various embodiments in conjunction with a network device and a terminal device, where the terminal device may also be referred to as a user equipment (UE), an access terminal, a user unit, a user station, a mobile station, a mobile platform, a remote station, a remote terminal, a mobile device, a user terminal, a terminal, a wireless communication device, a user agent or a user apparatus, etc.

The terminal device may be a station (STATION, STA) in the WLAN, may be a cellular phone, a cordless phone, a Session Initiation Protocol (SIP) phone, a Wireless Local Loop (WLL) station, or a personal digital assistant (PDA) device, a handheld device with a wireless communication function, a computing device or other processing devices connected to a wireless modem, a vehicle-mounted device, a wearable device, a terminal device in a next generation communication system such as in an NR network, or a terminal device in a Public Land Mobile Network (PLMN) network evolved in the future, etc.

In the embodiments of the present application, the terminal device may be deployed on land, which includes indoor or outdoor, in handheld, worn or vehicle-mounted; may also be deployed on water (e.g., on a ship, etc.); may also be deployed in the air (e.g., on an airplane, a balloon, a satellite, etc.).

In the embodiments of the present application, the terminal device may be a mobile phone, a pad, a computer with a wireless transceiving function, a Virtual Reality (VR) terminal device, an Augmented Reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, a vehicle-mounted communication device, a wireless communication chip/application specific integrated circuit (ASIC)/system on chip (SoC), etc.

As an example but not a limitation, in the embodiments of the present application, the terminal device may also be a wearable device. The wearable device, which is also referred to as a wearable smart device, is a generic term for a device that can be worn, into which the daily wear is intelligently designed and developed by applying wearable technologies, such as glasses, gloves, watches, clothing, and shoes, etc. The wearable device is a portable device that is worn directly on the body, or integrated into the user's clothing or accessories. The wearable device is not just a hardware device, but also achieves powerful functions through software supporting, data interaction, and cloud interaction. A generalized wearable smart device includes for example, a smartwatch or smart glasses, etc., with full functions, large size, and entire or partial functions without relying on a smartphone, as well as, for example, a smart bracelet and smart jewelry for physical sign monitoring, which only focuses on a certain type of application function and needs to be used in conjunction with other devices such as a smartphone.

In the embodiments of the application, the network device may be a device used for communicating with a mobile device. The network device may be an Access Point (AP) in the WLAN, a base station (Base Transceiver Station, BTS) in the GSM or CDMA, may also be a base station (NodeB, NB) in the WCDMA, or may also be an evolutionary base station (Evolutionary Node B, eNB or eNodeB) in the LTE, or a relay station or an access point, or a vehicle-mounted device, a wearable device, and a network device or a base station (gNB) in an NR network, or a network device in the PLMN network evolved in the future or a network device in the NTN network, etc.

As an example but not a limitation, in the embodiments of the present application, the network device may have a mobile characteristic, for example, the network device may be a mobile device. In some embodiments, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, etc. In some embodiments, the network device may also be a base station provided on land, water, and other places.

In the embodiments of the present application, the network device may provide a service for a cell, and the terminal device communicates with the network device through a transmission resource (such as a frequency domain resource, or a frequency spectrum resource) used by the cell. The cell may be a cell corresponding to the network device (such as the base station), the cell may belong to a macro base station or may also belong to a base station corresponding to a small cell, and the small cell here may include: a metro cell, a micro cell, a pico cell, a femto cell, etc, these small cells have characteristics of small coverage range and low transmission power, which are applicable for providing a data transmission service with high speed.

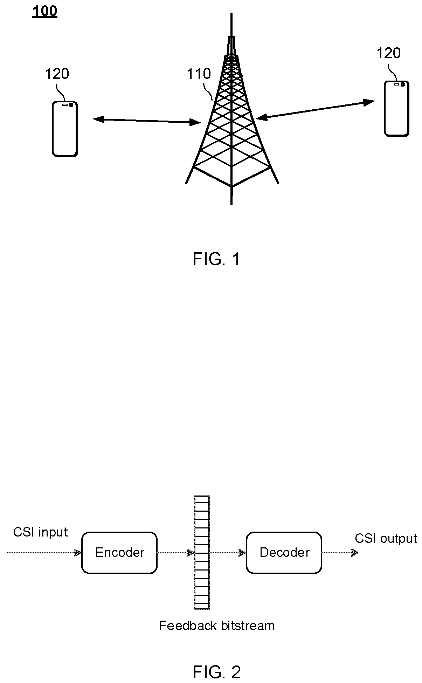

Exemplarily, the communication system 100 applied by the embodiments of the present application is shown in FIG. 1. The communication system 100 may include a network device 110, and the network device 110 may be a device that communicates with a terminal device 120 (also referred to as a communication terminal or a terminal). The network device 110 may provide communication coverage for a specific geographical area and may communicate with a terminal device located within the coverage area.

FIG. 1 exemplarily shows one network device and two terminal devices, and in some embodiments, the communication system 100 may include a plurality of network devices and may include another number of terminal devices within a coverage range of each network device, the embodiments of the present application are not limited thereto.

In some embodiments, the communication system 100 may also include other network entities such as a network controller and a mobility management entity, etc., which are not limited to the embodiments of the present application.

It should be understood that, in the embodiments of the present application, a device with a communication function in the network/system may be referred to as a communication device. Taking the communication system 100 shown in FIG. 1 as an example, the communication device may include the network device 110 and the terminal device 120 with the communication function, and the network device 110 and the terminal device 120 may be the specific devices described above, which will not be repeated herein; the communication device may also include other devices in the communication system 100, such as a network controller, a mobility management entity, and other network entities, which are not limited in the embodiments of the present application.

It should be understood that the terms herein "system" and "network" are often used interchangeably herein. The term herein "and/or" is only an association relationship to describe associated objects, meaning that there may be three kinds of relationships, for example, A and/or B may mean three cases where: A exists alone, both A and B exist, and B exists alone. In addition, a character "/" herein generally means that related objects before and after "/" are in an "or" relationship.

It should be understood that the present document relates to a first communication device and a second communication device, and the first communication device may be a terminal device, such as a mobile phone, a machine facility, a customer premise equipment (CPE), an industrial device, a vehicle, etc; the second communication device may be a counterpart communication device of the first communication device, such as a network device, a mobile phone, an industrial device, a vehicle, etc. The first communication device as a terminal device and the second communication device as a network device, are taken as a specific instance herein.

The terms used in the implementation parts of the present application are only used to explain specific embodiments of the present application and are not intended to limit the present application. The terms "first", "second", "third" and "fourth" etc., in the description, claims and drawings of the present application are used to distinguish different objects rather than to describe a specific order. In addition, the terms "including" and "having" and any derivations thereof are intended to cover non-exclusive inclusion.

It should be understood that the "indication" mentioned in the embodiments of the present application may be a direct indication, may also be an indirect indication, or may also represent having an association relationship. For example, A indicates B, which may mean that A directly indicates B, for example, B may be acquired by A; may also mean that A indirectly indicates B, for example, A indicates C, and B may be acquired by C; or may also mean that there is an association relationship between A and B.

In the description of the embodiments of the present application, the term "correspondence" may mean that there is a direct correspondence or indirect correspondence between the two, it may also mean that there is an associated relationship between the two, or it may also mean a relationship of indicating and being indicated or a relationship of configuring and being configured, etc.

In the embodiments of the present application, "predefined" or "preconfigured" may be implemented by pre-saving corresponding codes, tables or other manners that may be used for indicating related information, in the device (for example, including the terminal device and the network device), and the present application does not limit its specific implementation. For example, the predefined may refer to what is defined in a protocol.

In the embodiments of the present application, the "protocol" may refer to a standard protocol in the field of communication, which may include, for example, an LTE protocol, an NR protocol, and related protocols applied in the future communication system, and the present application is not limited thereto.

In order to facilitate the understanding of technical solutions of the embodiments of the present application, the technical solutions of the present application are described in detail below through specific embodiments. The following related technologies, as optional solutions, may be randomly combined with the technical solutions of the embodiments of the present application, which all belong to the protection scope of the embodiments of the present application. The embodiments of the present application include at least some of the following contents.

To facilitate the understanding of the technical solutions of the embodiments of the present application, a codebook-based CSI feedback solution in the NR system related to the present application is described below.

In the NR system, for the CSI feedback solution, codebook-based eigenvector feedback is usually used to enable a base station to acquire downlink CSI. Specifically, the base station transmits a downlink channel state information reference signal (CSI-RS) to a terminal device. The terminal device estimates and obtains CSI of a downlink channel by using the CSI-RS, and performs eigenvalue decomposition on the estimated and obtained downlink channel, to obtain an eigenvector corresponding to the downlink channel. Furthermore, the NR provides two codebook design solutions: Type 1 and Type 2, where the Type 1 codebook is used for CSI feedback with conventional accuracy and mainly used for a transmission in a single user multiple input multiple output (SU-MIMO) scenario, and the Type 2 codebook is mainly used to improve transmission performance of multi-user multiple input multiple output (MU-MIMO). For both the Type 1 and Type 2 codebooks, two-level codebook feedback of W=W₁W₂ is used, where W₁ describes a broadband and long-period characteristic of a channel and determines a group of L discrete Fourier transform (DFT) beams; W₂ describes a sub-band and short-term characteristic of a channel. Particularly, for the Type 1 codebook, W₂ is used to select a beam from the L DFT beams; for the Type 2 codebook, W₂ is used to linearly combine the L DFT beams in W₁ and provides feedback in a form of an amplitude and a phase. Generally, the Type 2 codebook uses a higher number of bits of feedback, and thus acquires the CSI feedback performance with higher accuracy.

To facilitate the understanding of the technical solutions of the embodiments of the present application, a method for channel information feedback based on deep learning related to the present application is described below.

Given the huge success of the artificial intelligence (Al) technology, especially deep learning, in computer vision, natural language processing, etc., the field of communication is beginning to try to use deep learning to solve technical problems that are difficult to solve with traditional communication methods, such as deep learning. A commonly-used neural network architecture in deep learning is nonlinear and data-driven, may perform feature extraction on actual channel matrix data, and restore at the base station side, the channel matrix information compressed and fed back by the terminal side as much as possible, which provides the possibility of reducing the CSI feedback overhead at the terminal side, while ensuring the restoration of the channel information. The CSI feedback based on deep learning regards the channel information as an image to be compressed, uses a deep learning autoencoder to compress and feed back the channel information, and reconstructs the compressed channel image at the transmitting end, which can retain the channel information to a greater extent.

A typical channel information feedback system is shown in FIG. 2. The entire feedback system is divided into an encoder part and a decoder part, which are deployed at a transmitting end and a receiving end respectively. After the transmitting end obtains the channel information through channel estimation, the transmitting end compresses and encodes a channel information matrix through a neural network of the encoder, and feeds back the compressed bitstream to the receiving end by an air interface feedback link. The receiving end restores the channel information according to the fed-back bitstream through the decoder, to obtain the complete feedback channel information. The encoder and the decoder shown in FIG. 2 may use, such as, a deep neural network (DNN) constructed by multiple fully connected layers, or use a convolutional neural network (CNN) constructed by multiple convolutional layers, or use a recurrent neural network (RNN) with a structure, such as a long short-term memory (LSTM) artificial neural network and a gated recurrent unit (GRU), etc., or may use various neural network architectures such as a residual and self-attention mechanism, to improve the performance of the encoder and the decoder.

The above CSI input and CSI output may both be full channel information, or eigenvector information obtained based on the full channel information. Therefore, currently, methods for channel information feedback based on deep learning are mainly divided into full channel information feedback and eigenvector feedback, where although the former can achieve the compression and feedback of the full channel information, the feedback bitstream overhead is higher, and at the same time, this feedback method is not supported in the NR system; and for a feedback method based on the eigenvector, it is a feedback architecture supported in the NR system currently, and the eigenvector feedback method based on deep learning can achieve higher CSI feedback accuracy with the same feedback bit overhead, or significantly reduce the feedback overhead in a case of achieving the same CSI feedback accuracy.

To facilitate the understanding of the technical solutions of the embodiments of the present application, problems solved by the present application are described below.

The CSI feedback in 5G NR uses a form based on codebook feedback based on Type 1 and Type 2. This codebook-based CSI feedback method has a good generalization ability for different users and various channel scenarios, and at the same time, may adapt to different number of transmitting antenna ports, and perform a flexible configuration for the number of sub-bands of feedback. However, since the codebook is pre-set, a correlation between different antenna ports and sub-bands is not effectively used, so the feedback overhead is large and the feedback performance is poor.

The CSI feedback method based on AI may extract the correlation of the eigenvector in the time domain and frequency domain, and thus can achieve better feedback performance with lower feedback overhead. However, the encoder and the decoder used in this solution both use the neural network architecture, which needs to be trained and obtained based on large-scale data sets. Therefore, in the deployment procedure, the number of antenna ports and the number of sub-bands actually configured both need to be consistent with the data sets used in the training, which thus is very inflexible. For example, when a data set used to construct the data sets is a configuration of 32 transmitting antenna ports and 12 sub-bands, a size of each sample of the data set is 32*12*2=768 (here, 2 represents the separation of a real part and an imaginary part). The CSI encoder and decoder models trained and obtained on the data set have inputs and outputs of vectors or matrices each with a length of 768, and cannot effectively adapt to inputs of eigenvectors with a configuration of other number of transmitting antenna ports and sub-bands. For example, in the actual deployment, a configuration of 16 antenna ports and 24 sub-bands is used, although the actual input vector is still the length of 768, the spatial domain and frequency domain features that it contains are inconsistent with the training set, so the model acquired on the above training set is not applicable under this configuration. However, in the actual deployment, different CSI feedback models are provided for each configuration of antenna ports and sub-bands, and thus, too many types of models need to be saved, resulting in excessive model storage overhead or model download overhead, which is not an effective solution. Therefore, how to solve the problem of the flexible adaptation of the Al-based CSI autoencoder under configurations of different number of antenna ports and sub-bands during the actual deployment, is of great significance for the research on the Al-based CSI feedback. Therefore, the present application considers a design method for the CSI autoencoder with a flexible configuration of antenna ports and sub-bands.

The technical solutions of the present application are described in detail below through specific embodiments.

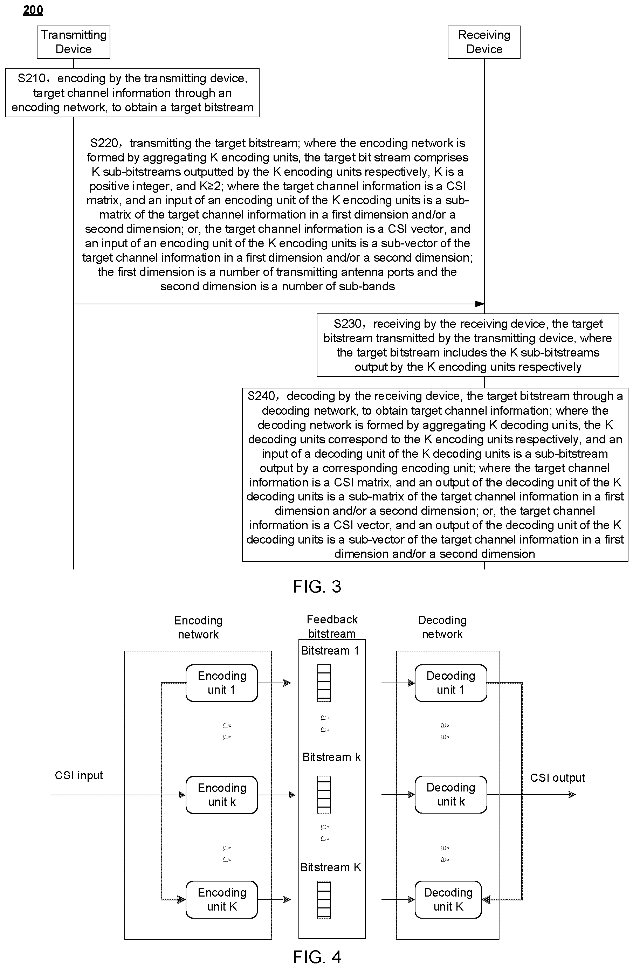

FIG. 3 is a schematic interaction diagram of a method 200 for channel information feedback according to the embodiments of the present application. As shown in FIG. 3, the method 200 for channel information feedback includes at least some of the following:
S210, encoding by a transmitting device, target channel information through an encoding network, to obtain a target bitstream;
S220, transmitting by the transmitting device, the target bitstream to a receiving device; where the encoding network is formed by aggregating K encoding units, the target bit stream includes K sub-bitstreams outputted by the K encoding units respectively, K is a positive integer, and K^2; where the target channel information is a channel state information (CSI) matrix, and an input of an encoding unit of the K encoding units is a sub-matrix of the target channel information in a first dimension and/or a second dimension; or, the target channel information is a CSI vector, and an input of an encoding unit of the K encoding units is a sub-vector of the target channel information in a first dimension and/or a second dimension; the first dimension is a number of transmitting antenna ports and the second dimension is a number of sub-bands;
S230, receiving by the receiving device, the target bitstream transmitted by the transmitting device, where the target bitstream includes K sub-bitstreams output by K encoding units respectively;
S240, decoding by the receiving device, the target bitstream through a decoding network, to obtain target channel information; where the decoding network is formed by aggregating K decoding units, the K decoding units correspond to the K encoding units respectively, and an input of a decoding unit of the K decoding units is a sub-bitstream output by a corresponding encoding unit; where the target channel information is a CSI matrix, and an output of the decoding unit of the K decoding units is a sub-matrix of the target channel information in the first dimension and/or the second dimension; or, the target channel information is a CSI vector, and an output of the decoding unit of the K decoding units is a sub-vector of the target channel information in the first dimension and/or the second dimension.

In the embodiments of the present application, the encoding network is formed by aggregating K encoding units, and the decoding network is formed by aggregating K decoding units, and the K encoding units correspond to the K decoding units one by one. The input of the encoding unit of the K encoding units is a sub-matrix or sub-vector of the target channel information in the first dimension and/or the second dimension, the input of the decoding unit of the K decoding units is the sub-bitstream output by the corresponding encoding unit, the output of the decoding unit of the K decoding units is a sub-matrix or sub-vector of the target channel information in the first dimension and/or the second dimension, and finally, the target channel information may be obtained by sub-matrices or sub-vectors output by the K decoding units. That is, through the above technical solutions, the CSI feedback can support a flexible configuration of antenna ports and sub-bands, and may achieve flexible adaptation to configurations of different transmitting antenna ports and different sub-bands, and there is no need to construct large data sets and train a corresponding model for each configuration of antenna ports and sub-bands. In the embodiments of the present application, only encoding units and decoding units with a few configurations of antenna ports and sub-bands need to be constructed, and a variety of configurations of antenna ports and sub-bands may be combined, by forming the encoding network by aggregating the encoding units and forming the decoding network by aggregating the decoding units.

In the embodiments of the present application, the target channel information input into the encoding network is consistent with the target channel information output from the decoding network in dimension and length, and by designing the encoding network (i.e., K encoding units) and the decoding network (i.e., K decoding units), the CSI output is enabled to be as close as possible to the CSI input. For the well-trained encoding network and decoding network, the target channel information input into the encoding network and the target channel information output from the decoding network may be regarded as the same information. The embodiments of the present application may use an evaluation metric such as minimum mean square error (MSE) and cosine similarity (CS), etc., to measure the restoration quality of the CSI, which will not be repeated here in this embodiment.

The antenna port described in the embodiments of the present application may be a CSI-RS antenna port or other antenna port, which is not limited thereto in the present application. The CSI-RS antenna port is taken as an example for description in the following in the present application.

In some embodiments, the receiving device is a terminal device, and the transmitting device is a network device; or, the receiving device is a network device, and the transmitting device is a terminal device.

In some other embodiments, the receiving device is a terminal device, and the transmitting device is another terminal device. For example, the embodiments of the present application are applied to sidelink (SL) communication.

In some further embodiments, the transmitting device is a network device, and the receiving device is another network device. For example, the embodiments of the present application are applied to backhaul link communication.

In some embodiments, in a case where the target channel information is the CSI matrix, the encoding unit of the K encoding units obtains a sub-bitstream by extracting spatial domain correlation between antenna ports and/or frequency domain correlation between sub-bands within an input sub-matrix. Correspondingly, the decoding unit of the K decoding units obtains the sub-matrix by extracting spatial domain correlation between antenna ports and/or frequency domain correlation between sub-bands within an input sub-bitstream.

In some embodiments, in a case where the target channel information is the CSI vector, the encoding unit of the K encoding units obtains a sub-bitstream by extracting spatial domain correlation between antenna ports and/or frequency domain correlation between sub-bands within an input sub-vector. Correspondingly, the decoding unit of the K decoding units obtains the sub-vector by extracting spatial domain correlation between antenna ports and/or frequency domain correlation between sub-bands within an input sub-bitstream.

In the embodiments of the present application, the encoding unit may also be referred to as an encoder, and the decoding unit may also be referred to as a decoder. The K encoding units may also be referred to as an encoder group, and the K decoding units may also be referred to as a decoder group. A CSI autoencoding network may contain the encoding network and the decoding network.

Specifically, taking downlink CSI feedback as an example, the encoding network is deployed on a terminal device, and the decoding network is deployed on a network device. In consideration of multiple configurations of the number of CSI-RS antenna ports and multiple configurations of the number of sub-bands, a wide variety of dimension formats of CSI inputs may be combined flexibly, and in the actual deployment process, different CSI encoder models and decoder models are adapted for each input format, which will bring a very large overhead. For example, the terminal side needs to store encoder models that adapt to different scenarios when the number of the antenna ports and the number of the configured sub-bands change, and at the same time, when the model switching occurs, the network side and the terminal side need to indicate the model switching by a signaling, which also brings a certain signaling overhead. Therefore, the present application designs an encoding network formed by aggregating K encoding units and a decoding network formed by aggregating K decoding units, the K encoding units correspond to the K decoding units one by one, and one encoding unit and its corresponding decoding unit may be referred to as a pair of basic model units. For each encoding unit in the encoding network, its input interface is a sub-vector or sub-matrix of a CSI input (i.e., the target channel information), and the output feedback sub-bitstream is also a sub-vector of a feedback bitstream (i.e., the target bitstream), and for the corresponding decoding unit in the decoding network, its output interface is a sub-vector or sub-matrix of a CSI output (i.e., the target channel information). It needs to be noted that for each pair of basic model units, as a basic module for model aggregating, it cannot be split further internally, that is, for the encoding unit of each pair of basic model units, it uses a neural network structure such as a fully connected layer, a convolutional layer or a residual, and jointly encodes the input CSI sub-vector or sub-matrix, and converts the input CSI sub-vector or sub-matrix as a whole into a feedback sub-bitstream by extracting the spatial domain correlation between antenna ports and/or the frequency domain correlation between sub-bands inside the input CSI sub-vector or sub-matrix, so that the feedback sub-bitstream cannot be split into a plurality of smaller sub-bitstreams anymore.

In the embodiments of the present application, the K decoding units correspond to the K encoding units respectively, that is, the K decoding units correspond to the K encoding units one by one.

For example, as shown in FIG. 4, an input of an i-th encoding unit is a sub-matrix i, an output of the i-th encoding unit is a sub-bitstream i, an input of an i-th decoding unit is the sub-bitstream i, an output of the i-th decoding unit is the sub-matrix i, i is a positive integer, and 1 ≤i≤K.

For another example, as shown in FIG. 4, the input of the i-th encoding unit is a sub-vector i, the output of the i-th encoding unit is the sub-bitstream i, the input of the i-th decoding unit is the sub-bitstream i, the output of the i-th decoding unit is the sub-vector i, i is a positive integer, and 1 ≤i ≤K.

In the embodiments of the present application, the target bitstream is: as the output of the encoding network for air interface feedback, and through the air interface feedback, as the input of the decoding network. A format of the target bitstream is a vector composed of 0/1 bits with a certain length. Specifically, the target bitstream B may be divided into K parts, such as B=[b₁,b₂,···b_{K}], where the k-th sub-bitstream bₖ is an output of a k-th encoding unit within the encoding network and used as an input of a k-th decoding unit within the decoding network. Herein, the length of each sub-bitstream may be the same or different.

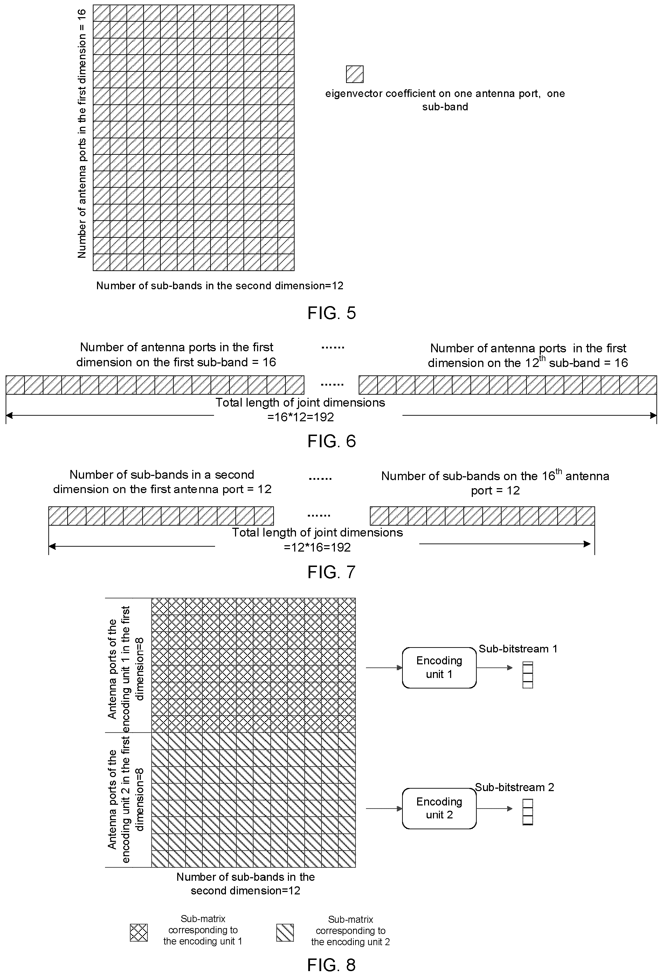

In some embodiments, the target channel information may contain channel information of the first dimension and channel information of the second dimension, and may be input into the encoding network separately as a CSI matrix, that is, the target channel information is a CSI matrix. For example, as shown in FIG. 5, the length of the first dimension is 16 (i.e., 16 antenna ports), and the length of the second dimension is 12 (i.e., 12 sub-bands). Each element is an eigenvector coefficient (the coefficient is a complex number) on an antenna port and a sub-band, the total length is 192, as the CSI matrix.

In some embodiments, the target channel information may contain channel information of the first dimension and channel information of the second dimension, which may be in a joint form as a CSI vector, input into the encoding network, that is, the target channel information is a CSI vector. For example, as shown in FIG. 6 and FIG. 7, the CSI vector may be arranged in two ways, where FIG. 6 arranges the number of antenna ports of the first dimension first and then the number of sub-bands of the second dimension; FIG. 7 arranges the number of sub-bands of the second dimension first and then the number of antenna ports of the first dimension.

It needs to be noted that the CSI input formats of different dimensions shown in FIG. 5 to FIG. 7 described above may be adapted to different encoding network models and decoding network models.

In some embodiments, in a case where the target channel information is the CSI matrix, the sub-matrix corresponding to the encoding unit of the K encoding units is determined based on a continuous aggregation method, or the sub-matrix corresponding to the encoding unit of the K encoding units is determined based on a non-continuous aggregation method.

In some embodiments, in a case where the sub-matrix corresponding to the encoding unit of the K encoding units is determined based on the continuous aggregation method, the sub-matrix corresponding to the encoding unit of the K encoding units occupies a continuous part of the target channel information in the first dimension and/or the second dimension. And/or, the sub-matrix corresponding to the decoding unit of the K decoding units occupies a continuous part of the target channel information in the first dimension and/or the second dimension.

In some embodiments, in a case where the sub-matrix corresponding to the encoding unit of the K encoding units is determined based on the non-continuous aggregation method, the sub-matrix corresponding to the encoding unit of the K encoding units occupies a non-continuous part of the target channel information in the first dimension and/or the second dimension. And/or, the sub-matrix corresponding to the decoding unit of the K decoding units occupies a non-continuous part of the target channel information in the first dimension and/or the second dimension.

In some embodiments, sub-matrices corresponding to different encoding units of the K encoding units have a same size in the first dimension and the second dimension. That is, the sub-matrices corresponding to different encoding units of the K encoding units are symmetrically distributed or symmetrically aggregated in the first dimension and the second dimension. And/or, sub-vectors corresponding to different decoding units of the K decoding units have a same size in the first dimension and the second dimension.

In some implementations, in a case where the sub-matrix corresponding to the encoding unit of the K encoding units is determined based on the continuous aggregation method, sub-matrices corresponding to different encoding units of the K encoding units have a same size in the first dimension and the second dimension.

In some implementations, in a case where the sub-matrix corresponding to the encoding unit of the K encoding units is determined based on the non-continuous aggregation method, sub-matrices corresponding to different encoding units of the K encoding units have a same size in the first dimension and the second dimension.

In some embodiments, the target channel information is the CSI matrix with the first dimension of M and the second dimension of N, M and N are both positive integers; where a size of a sub-matrix corresponding to each encoding unit of the K encoding units in the first dimension is *M*/*K,* and a size of a sub-matrix corresponding to each encoding unit of the K encoding units in the second dimension is *N*/*K*. And/or, a size of a sub-matrix corresponding to each decoding unit of the K decoding units in the first dimension is *M*/*K,* and a size of a sub-matrix corresponding to each decoding unit of the K decoding units in the second dimension is *N*/*K.*

In some implementations, in a case where sub-matrices corresponding to different encoding units of the K encoding units have a same size in the first dimension and the second dimension, a structure and a parameter of each encoding unit of the K encoding units are the same.

In some implementations, in a case where sub-matrices corresponding to different decoding units of the K decoding units have a same size in the first dimension and the second dimension, a structure and a parameter of each decoding unit of the K decoding units are the same.

In some embodiments, in a case where the target channel information is the CSI vector, the sub-vector corresponding to the encoding unit of the K encoding units is determined based on a continuous aggregation method, or the sub-vector corresponding to the encoding unit of the K encoding units is determined based on a non-continuous aggregation method.

In some embodiments, in a case where the sub-vector corresponding to the encoding unit of the K encoding units is determined based on the continuous aggregation method, the sub-vector corresponding to the encoding unit of the K encoding units occupies a continuous part of the target channel information in the first dimension and/or the second dimension. And/or, the sub-vector corresponding to the decoding unit of the K decoding units occupies a continuous part of the target channel information in the first dimension and/or the second dimension.

In some embodiments, in a case where the sub-vector corresponding to the encoding unit of the K encoding units is determined based on the non-continuous aggregation method, the sub-vector corresponding to the encoding unit of the K encoding units occupies a non-continuous part of the target channel information in the first dimension and/or the second dimension. And/or, the sub-vector corresponding to the decoding unit of the K decoding units occupies a non-continuous part of the target channel information in the first dimension and/or the second dimension.

In some embodiments, sub-vectors corresponding to different encoding units of the K encoding units have a same size in the first dimension and the second dimension. That is, the sub-vectors corresponding to different encoding units of the K encoding units are symmetrically distributed or symmetrically aggregated in the first dimension and the second dimension. And/or, sub-vectors corresponding to different decoding units of the K decoding units have a same size in the first dimension and the second dimension.

In some embodiments, the target channel information is the CSI vector with the first dimension of M and the second dimension of N, M and N are both positive integers; where a size of a sub-vector corresponding to each encoding unit of the K encoding units in the first dimension is *M*/*K,* and a size of a sub-vector corresponding to each encoding unit of the K encoding units in the second dimension is *N*/*K*. And/or, a size of a sub-vector corresponding to each decoding unit of the K decoding units in the first dimension is *M*/*K,* and a size of a sub-vector corresponding to each decoding unit of the K decoding units in the second dimension is *N*/*K.*

In some embodiments, in a case where the sub-vectors corresponding to different encoding units of the K encoding units have a same size in the first dimension and the second dimension, a structure and a parameter of each encoding unit of the K encoding units are the same.

In some embodiments, in a case where the sub-vectors corresponding to different decoding units of the K decoding units have a same size in the first dimension and the second dimension, a structure and a parameter of each decoding unit of the K decoding units are the same.

In some embodiments, for a CSI matrix with the first dimension of 16 antenna ports and the second dimension of 12 sub-bands, K=2, that is, the encoding network may be aggregated by 2 encoding units, and the decoding network may be aggregated by 2 decoding units. Specifically, sub-matrices are determined by the two encoding units based on the continuous aggregation method in the first dimension, where the input of the encoding unit 1 (corresponding to the output of the decoding unit 1) is a sub-matrix with 8 continuous antenna ports of port indices 0-7 in the first dimension and 12 sub-bands in the second dimension; the input of the encoding unit 2 (corresponding to the output of the decoding unit 2) is a sub-matrix with 8 continuous antenna ports of antenna port indices 8-15 in the first dimension and 12 sub-bands in the second dimension, as shown in FIG. 8. It needs to be noted that this embodiment is described by taking the CSI matrix with 16 antenna ports and 12 sub-bands as an example, and for other number of antenna ports and other number of sub-bands, reference may be made to this embodiment, which will not be repeated here. In addition, for the CSI vector, sub-vectors are determined based on the continuous aggregation method in the first dimension by two encoding units, and for the specific aggregation, reference may be made to this embodiment, which will not be repeated here.

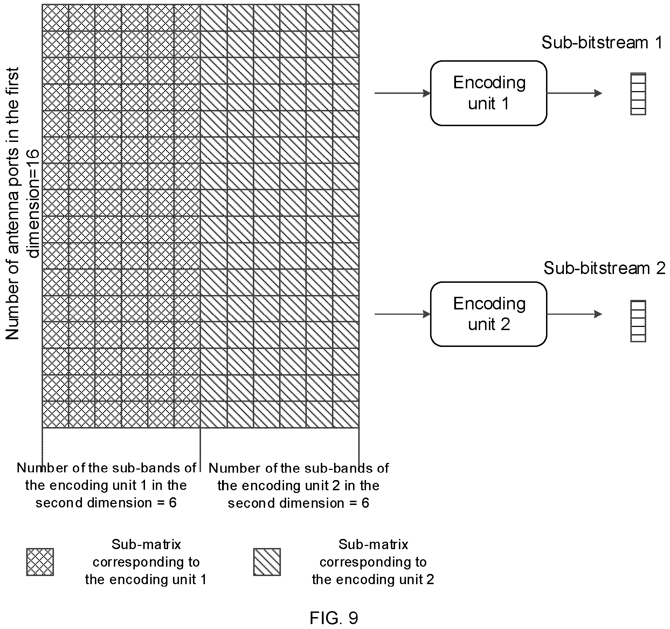

In some embodiments, for a CSI matrix with the first dimension of 16 antenna ports and the second dimension of 12 sub-bands, K=2, that is, the encoding network may be aggregated by 2 encoding units, and the decoding network may be aggregated by 2 decoding units. Specifically, sub-matrices are determined based on the continuous aggregation method in the second dimension by the two encoding units, where the input of the encoding unit 1 (corresponding to the output of the decoding unit 1) is a sub-matrix with 6 continuous sub-bands of sub-band indices 0-5 in the second dimension and 16 antenna ports in the first dimension; the input of the encoding unit 2 (corresponding to the output of the decoding unit 2) is a CSI sub-matrix with 6 continuous sub-bands of sub-band indices 6-11 in the second dimension and 16 antenna ports in the first dimension, as shown in FIG. 9. It needs to be noted that the embodiment is described by taking the CSI matrix with 16 antenna ports and 12 sub-bands as an example, and for other number of antenna ports and other number of sub-bands, reference may be made to this embodiment, which will not be repeated here. In addition, for the CSI vector, sub-vectors are determined by two encoding units based on the continuous aggregation method in the second dimension, and for the specific aggregation method, reference may be made to this embodiment, which will not be repeated here.

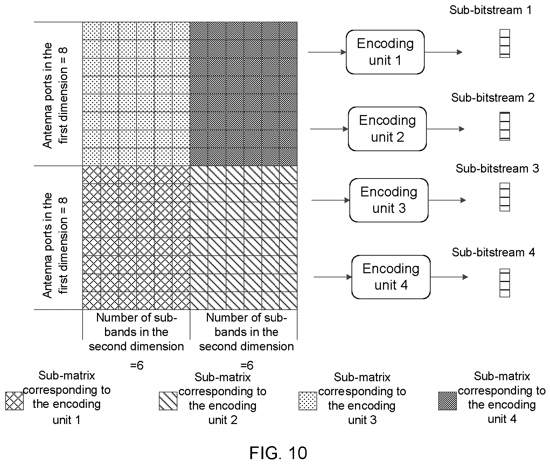

In some embodiments, for a CSI matrix with the first dimension of 16 antenna ports and the second dimension of 12 sub-bands, K=4, that is, the encoding network may be aggregated by 4 encoding units, and the decoding network may be aggregated by 4 decoding units. Specifically, sub-matrices are determined based on the continuous aggregation method in the first dimension and the second dimension by the 4 encoding units, where the input of encoding unit 1 (corresponding to the output of decoding unit 1) is a sub-matrix formed by 8 continuous antenna ports of port indices 0-7 in the first dimension and 6 continuous sub-bands of sub-band indices 0-5 in the second dimension; the input of encoding unit 2 (corresponding to the output of decoding unit 2) is a sub-matrix formed by 8 continuous antenna ports of antenna port indices 0-7 in the first dimension and 6 continuous sub-bands of sub-band indices 6-11 in the second dimension; the input of encoding unit 3 (corresponding to the output of decoding unit 3) is a sub-matrix formed by 8 continuous antenna ports of antenna port indices 8-15 in the first dimension and 6 continuous sub-bands of sub-band indices 0-5 in the second dimension; the input of encoding unit 4 (corresponding to the output of decoding unit 4) is a sub-matrix formed by 8 continuous antenna ports of antenna port indices 8-15 in the first dimension and 6 continuous sub-bands of sub-band indices 6-11 in the second dimension, as shown in FIG. 10. It needs to be noted that the embodiment is described by taking the CSI matrix with 16 antenna ports and 12 sub-bands as an example, and for other numbers of antenna ports and other numbers of sub-bands, reference may be made to this embodiment, which will not be repeated here. In addition, for the CSI vector, sub-vectors are determined based on the continuous aggregation method in the first dimension and the second dimension by the four encoding units, and for the specific aggregation method, reference may be made to this embodiment, which will not be repeated here.

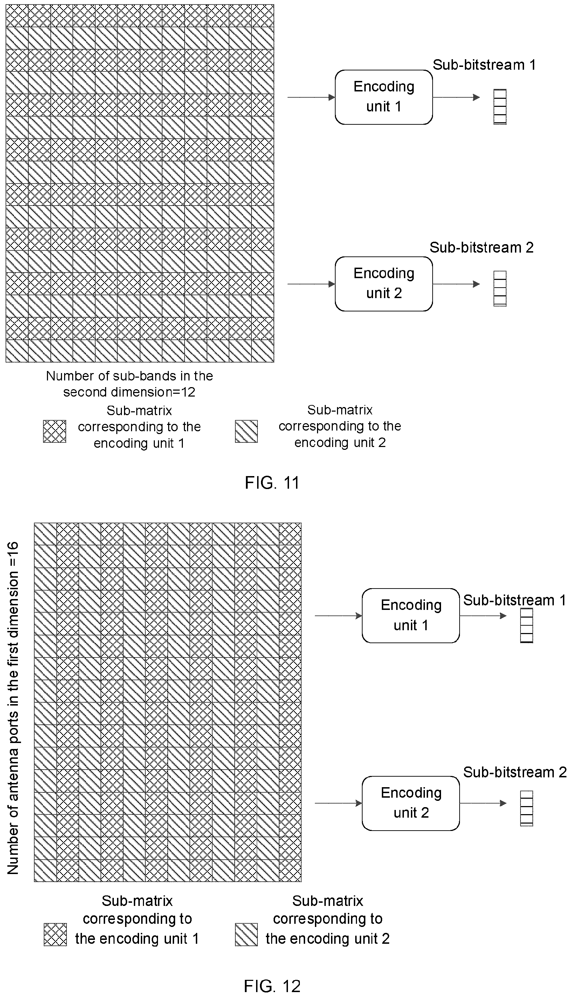

In some embodiments, for a CSI matrix with the first dimension of 16 antenna ports and the second dimension of 12 sub-bands, K=2, that is, the encoding network may be aggregated by 2 encoding units, and the decoding network may be aggregated by 2 decoding units. Specifically, sub-matrices are determined based on the non-continuous aggregation method in the first dimension and based on the continuous aggregation method in the second dimension by the two encoding units, where the input of the encoding unit 1 (corresponding to the output of the decoding unit 1) is a sub-matrix composed of 8 ports indicated by even indices of antenna ports in the first dimension and 12 sub-bands in the second dimension; the input of the encoding unit 2 (corresponding to the output of the decoding unit 2) is a sub-matrix composed of 8 ports indicated by odd indices of antenna ports in the first dimension and 12 sub-bands in the second dimension, as shown in FIG. 11. It needs to be noted that this embodiment is described by taking the CSI matrix with 16 antenna ports and 12 sub-bands as an example, and for other number of antenna ports and other number of sub-bands, reference may be made to this embodiment, which will not be repeated here. In addition, for the CSI vector, sub-vectors are determined based on the non-continuous aggregation method in the first dimension and based on the continuous aggregation method in the second dimension by two encoding units, and for the specific aggregation method, reference may be made to this embodiment, which will not be repeated here.

In some embodiments, for a CSI matrix with the first dimension of 16 antenna ports and the second dimension of 12 sub-bands, K=2, that is, the encoding network may be aggregated by 2 encoding units, and the decoding network may be aggregated by 2 decoding units. Specifically, sub-matrices are determined based on the continuous aggregation method in the first dimension and based on the non-continuous aggregation method in the second dimension by the two encoding units, where the input of the encoding unit 1 (corresponding to the output of the decoding unit 1) is a sub-matrix composed of 16 antenna ports in the first dimension and sub-bands indicated by even indices in the second dimension; the input of the encoding unit 2 (corresponding to the output of the decoding unit 2) is a sub-matrix composed of 16 antenna ports in the first dimension and sub-bands indicated by odd indices in the second dimension, as shown in FIG. 12. It needs to be noted that this embodiment is described by taking the CSI matrix with 16 antenna ports and 12 sub-bands as an example, and for other number of antenna ports and other number of sub-bands, reference may be made to this embodiment, which will not be repeated here. In addition, for the CSI vector, sub-vectors are determined based on the continuous aggregation method in the first dimension and based on the non-continuous aggregation method in the second dimension by two encoding units, and for the specific aggregation method, reference may be made to this embodiment, which will not be repeated here.

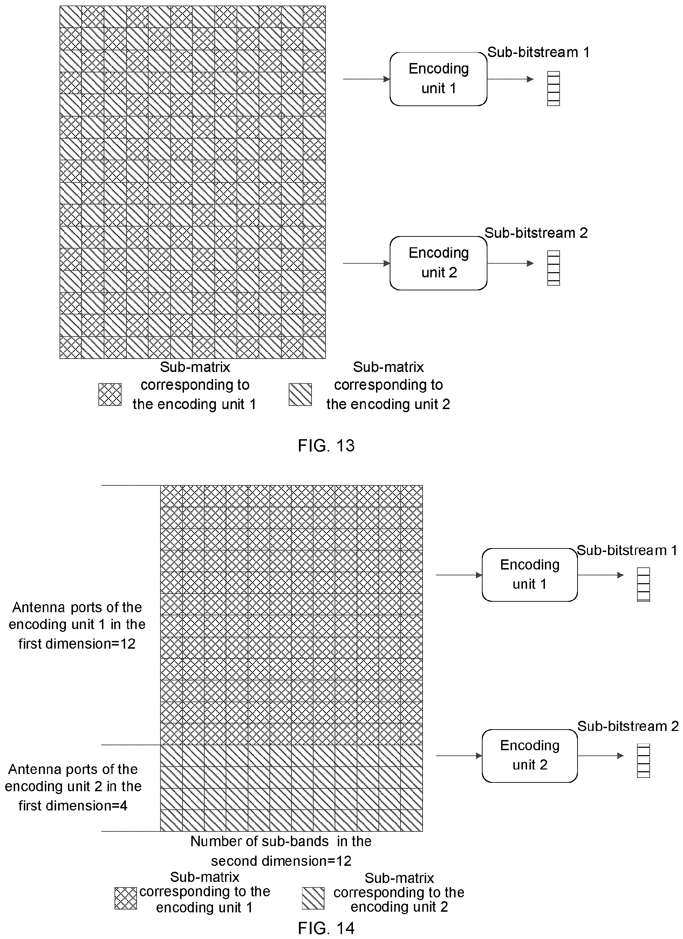

In some embodiments, for a CSI matrix with the first dimension of 16 antenna ports and the second dimension of 12 sub-bands, K=2, that is, the encoding network may be aggregated by 2 encoding units, and the decoding network may be aggregated by 2 decoding units. Specifically, sub-matrices are determined based on the non-continuous aggregation method both in the first dimension and the second dimension by the two encoding units, where the input of the encoding unit 1 (corresponding to the output of the decoding unit 1) is a sub-matrix composed of sub-bands indicated by odd indices on antenna ports indicated by even indices and sub-bands indicated by even indices on antenna ports indicated by odd indices; the input of the encoding unit 2 (corresponding to the output of the decoding unit 2) is a sub-matrix composed of sub-bands indicated by even indices on antenna ports indicated by even indices and sub-bands indicated by odd indices on antenna ports indicated by odd indices, as shown in FIG. 13. It needs to be noted that the embodiment is described by taking the CSI matrix with 16 antenna ports and 12 sub-bands as an example, and for other number of antenna ports and other number of sub-bands, reference may be made to this embodiment, which will not be repeated here. In addition, for the CSI vector, sub-vectors are determined based on the non-continuous aggregation method both in the first dimension and the second dimension by two encoding units, and for the specific aggregation method, reference may be made to this embodiment, which will not be repeated here.

It needs to be noted that in the above FIG. 8 to FIG. 13, when K=2, the first pair of basic model units and the second pair of basic model units both use the same model, that is, the sub-matrix dimensions and lengths of the interface CSI inputs of the encoding unit 1 and the encoding unit 2 are the same, and the internal neural network structures and parameters of the encoding unit 1 and the encoding unit 2 are also the same; the input lengths of input interface feedback sub-bitstreams of the decoding unit 1 and the decoding unit 2 are the same, the sub-matrix dimensions and lengths output by the output interface CSI of the decoding unit 1 and the decoding unit 2 are the same, and the internal neural network structures and parameters of the decoding unit 1 and the decoding unit 2 are also the same. This aggregation method is referred to as symmetric aggregation.

In some embodiments, sub-matrices corresponding to some or all of the K encoding units have different sizes in the first dimension and/or the second dimension. That is, sub-matrices corresponding to different encoding units of the K encoding units are asymmetrically distributed or asymmetrically aggregated in the first dimension and the second dimension. Or, sub-matrices corresponding to some or all of the K decoding units have different sizes in the first dimension and/or the second dimension.

Specifically, for example, in a case where the sub-matrix corresponding to the encoding unit of the K encoding units is determined based on the continuous aggregation method, the sub-matrices corresponding to some or all of the K encoding units have different sizes in the first dimension and/or the second dimension.

In some embodiments, sub-vectors corresponding to some or all of the K encoding units have different sizes in the first dimension and/or the second dimension. That is, sub-vectors corresponding to different encoding units of the K encoding units are asymmetrically distributed or asymmetrically aggregated in the first dimension and the second dimension.

Specifically, for example, in a case where the sub-vector corresponding to the encoding unit of the K encoding units is determined based on the continuous aggregation method, the sub-vectors corresponding to some or all of the K encoding units have different sizes in the first dimension and/or the second dimension.

In some embodiments, for a CSI matrix with the first dimension of 16 antenna ports and the second dimension of 12 sub-bands, K=2, that is, the encoding network may be aggregated by 2 encoding units, and the decoding network may be aggregated by 2 decoding units. Specifically, as shown in FIG. 14, sub-matrices are determined based on the continuous asymmetric aggregation method in the first dimension by the two encoding units, the input of encoding unit 1 is a sub-matrix composed of 12 antenna ports of indices of 0 to 11 in the first dimension and 12 sub-bands in the second dimension; the input of encoding unit 2 is a sub-matrix composed of 4 antenna ports of indices of 12 to 15 in the first dimension and 12 sub-bands in the second dimension. At this time, the encoding unit 1 and the encoding unit 2 are different models, and the decoding unit 1 and the decoding unit 2 are different models. The different models refer to dimensions and lengths of model input and output interfaces of the models, as well as network structures and parameters within the models being all different.

In the embodiments of the present application, the implementation of the asymmetric aggregation of models may be performed only in the first dimension for the asymmetric aggregation, or only in the second dimension for the asymmetric aggregation, or in both the first dimension and the second dimension for the asymmetric aggregation. The methods of the asymmetric aggregation provide greater flexibility for the aggregation of encoding units with different input interfaces into a larger encoding network, and the aggregation of decoding units with different input interfaces into a larger decoding network. However, since the asymmetric aggregation requires the flexible division of resources in the spatial domain and frequency domain, the support for the continuous aggregation is friendly, while for the non-continuous aggregation (i.e., interval aggregation) scenarios, the division of resources is relatively troublesome, and since there are a plurality of division methods, the network side and the terminal side need to further coordinate a pattern of the asymmetric interval aggregation, and therefore, the embodiments of the present application only support the continuous asymmetric aggregation, and do not support the non-continuous asymmetric aggregation.

It needs to be noted that, for the continuous aggregation, it selects continuous antenna port spatial domian resources in the first dimension, or selects continuous frequency domain resources in the second dimension, and it is more convenient and flexible in the resource division, so it has the advantage of supporting the asymmetric aggregation. However, in the continuous aggregation, each encoding unit can only extract the correlation of CSI of the inter-spatial domain and inter-frequency domain within a limited coverage range, and cannot further perform compression by utilizing the gain brought by the correlation of the spatial domain and the frequency domain within a larger range, therefore, its CSI compression performance may be inferior to that of the non-continuous aggregation.

It also needs to be noted that, for the non-continuous aggregation, it may implement resource division with an interval in the first dimension and/or the second dimension, and thus its advantage is that the input of each encoding unit covers a larger spatial domain range and frequency domain range, so it makes more use of the CSI correlation of the inter-spacial domain and the inter-frequency domain, and further compresses the feedback overhead, or improves the CSI feedback performance under limited feedback bits.

It needs to be noted that, in the symmetric aggregation and the asymmetric aggregation, the same basic model units (i.e., an encoding unit and its corresponding decoding unit) may correspond to a same physical computing unit or different physical computing units, that is, for the downlink CSI feedback, the encoding unit of the same basic model units may be deployed one or more times at the terminal side, and the decoding unit of the same basic model units may be deployed one or more times at the network side. For different basic model units (i.e., an encoding unit and its corresponding decoding unit) in the asymmetric aggregation, they correspond to different physical computing units, and the corresponding encoding unit and decoding unit need to be deployed at both the terminal side and the network side.

For example, a comparison between the continuous aggregation and the non-continuous aggregation is shown in Table 1 below.

**Table 1**

| Aggregation Method | Symmetric aggregation | Asymmetric aggregation |
|---|---|---|
| Continuous aggregation | support | support |
| Non-continuous aggregation | support | not support |

In some embodiments, the transmitting device receives a first signaling transmitted by the receiving device; where the first signaling includes first indication information, second indication information and third indication information, the first indication information is used to indicate at least one antenna port basic model in the first dimension (BasicModel-Portxx(xx=00,01,10,11)), the at least one antenna port basic model is used by the transmitting device to determine an aggregation method in the first dimension, the second indication information is used to indicate at least one sub-band basic model in the second dimension (BasicModel-Subbandy(y=0,1)), the at least one sub-band basic model is used by the transmitting device to determine an aggregation method in the second dimension, the third indication information is used to indicate an aggregation basic model (BasicModel-Aggx(x=0,1)), and the aggregation basic model is used by the transmitting device to determine to perform continuous aggregation or non-continuous aggregation; and
the transmitting device determines to form the encoding network by aggregating the K encoding units, according to the first indication information, the second indication information and the third indication information.

In some embodiments, the first signaling may be a radio resource control (RRC) signaling, or downlink control information (DCI), or a media access control control element (MAC CE), or a dedicated model selecting downlink signaling.

In some embodiments, in a case where sub-matrices or sub-vectors corresponding to some or all of the K encoding units have different sizes in the first dimension and/or the second dimension, the encoding unit of the K encoding units is first aggregated in descending order according to an antenna port index corresponding to the at least one antenna port basic model, and then aggregated in descending order according to a sub-band index corresponding to the at least one sub-band basic model.

In some embodiments, in a case where sub-matrices or sub-vectors corresponding to some or all of the K decoding units have different sizes in the first dimension and/or the second dimension, the decoding unit of the K decoding units first splits the target bitstream in descending order according to an antenna port index corresponding to the at least one antenna port basic model, and then splits the target bitstream in descending order according to a sub-band index corresponding to the at least one sub-band basic model.

In the embodiments of the present application, based on the model aggregation, the basic model unit may be used to implement the design of the CSI autoencoder group, and thus the CSI autoencoder group with multiple ports and multiple sub-bands may be constructed by using the limited number of basic model units, and using the model aggregation method, thereby reducing the overhead of the model switching and the model indication.

In some embodiments, for the first dimension, considering the downlink CSI feedback procedure, under a codebook-based CSI feedback method in a multiple-input multiple-output (MIMO) system, the number of transmitting antenna ports (here referred to as the number of downlink CSI-RS ports) configured by the network side may include a plurality of configurations as shown in Table 2 below.

**Table 2**

| Number of CSI-RS antenna ports | (N₁, N₂) |
|---|---|
| 4 | (2, 1) |
| 8 | (2, 2) / (4, 1) |
| 12 | (3, 2) / (6, 1) |
| 16 | (4, 2) / (8, 1) |
| 24 | (6, 2) / (4, 3) / (12, 1) |
| 32 | (8, 2) / (4, 4) / (16, 1) |

Herein, in the above Table 2, the number of CSI-RS antenna ports supports up to 32 ports, and N₁ and N₂ represent the number of dual-polarization antenna ports in a horizontal dimension and a vertical dimension, respectively. For the number of sub-bands in the second dimension, it may be any number of sub-bands, according to the configured bandwidth and the number of physical resource blocks (PRBs), and the number of PRBs that can be configured within each sub-band may be the configuration of a single PRB, 4 PRBs, 8 PRBs, 16 PRBs, etc. The CSI autocoding network is insensitive to the configuration of the number of PRBs within the sub-band and does not need to be adjusted according to the number of PRBs within the sub-band.

In some embodiments, taking the continuous aggregation as an example, consider to select the antenna port configurations (N1, N2) = (2, 1), (3, 2), (4, 2), (8, 1) as the antenna port basic models in the first dimension, where (N1, N2) = (2, 1) is denoted as BasicModel-Port00, (N1, N2) = (3, 2) is denoted as BasicModel-Port01, (N1, N2) = (4, 2) is denoted as BasicModel-Port10, and (N1, N2) = (8, 1) is denoted as BasicModel-Port11, and then models of other antenna port configurations may be aggregated by BasicModel-Portxx (xx = 00, 01, 10, 11), such as represented by BasicModel-Portxx + BasicModel-Portxx, as shown in Table 3.

**Table 3**

| Number of CSI-RS antenna ports | (N₁, N₂) *BasicModel-Port-Index* |
|---|---|
| 4 | (2, 1) *BasicModel-Port00* |
| 8 | (2, 2) *BasicModel-Port00+ BasicModel-Port00* |
| | (4, 1) *BasicModel-Port00+ BasicModel-Port00* |
| 12 | (3, 2) *BasicModel-Port01* |
| | (6, 1) *BasicModel-Port00+ BasicModel-Port00+BasicModel-Port00* |
| 16 | (4, 2) *BasicModel-Port10* |
| | (8, 1) *BasicModel-Port11* |
| 24 | (6, 2) *BasicModel-Port01+, BasicModel-Port01* |
| | (4, 3) *BasicModel-Port00+ BasicModel-Port00+ BasicModel-Port10* |
| | (12, 1) *BasicModel-Port00+ BasicModel-Port00+ BasicModel-Port11* |
| 32 | (8, 2) *BasicModel-Port10+ BasicModel-Port10* |
| | (4, 4) *BasicModel-Port10+ BasicModel-Port10* |
| | (16, 1) *BasicModel-Port11*+ *BasicModel-Port11* |

It needs to be noted that the present application is not limited to supporting the configuration of up to 32 antenna ports in the first dimension, and for the further evolution and enhancement of the MIMO in the future, a possible configuration of more than 32 antenna ports (such as 64 antenna ports) may be contained, and the solution described in the present application may also be used for extension. Furthermore, in order to better utilize the spatial domain correlation between antenna ports in the first dimension, more antenna ports, such as configurations of (16, 1) or (8, 2), etc., may be used as the basic model units for aggregation. The present application isn't limited thereto, and the extensions of more antenna ports based on the solution are all contained within the scope of the present application.

In some embodiments, for the second dimension, one implementation is that a configuration of a single sub-band and a configuration of 4 sub-bands may be selected as sub-band basic models, denoted as BasicModel-Subband0 and BasicModel-Subband1, and then for all configurations of sub-bands less than 4, BasicModel-Subband0 is used to implement the symmetric aggregation; for all configurations of sub-bands greater than 4, BasicModel-Subband1 is used to implement the symmetric aggregation, for example, for a configuration of 2 sub-bands, 2 model units with 1 sub-band are used to implement the aggregation, and for a configuration of 8 sub-bands, 2 model units with 4 sub-bands are used to implement the aggregation. Or, BasicModel-Subband1 and BasicModel-Subband0 are used to implement the asymmetric aggregation, for example, for a configuration of 6 sub-bands, 2 model units with 1 sub-band and 1 model unit with 4 sub-bands are used to implement the aggregation.

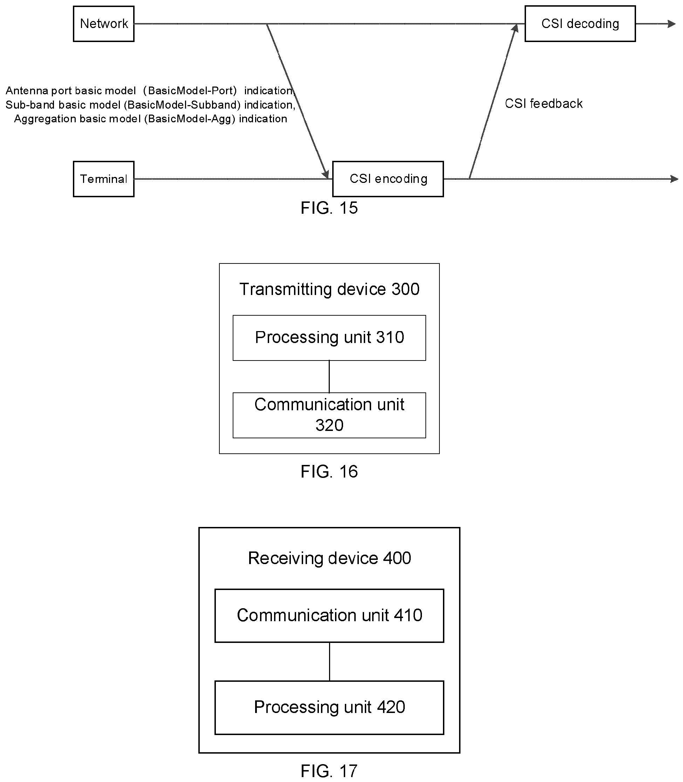

In some embodiments, a basic model unit (an encoding unit and its corresponding decoding unit) is determined by BasicModel-Portxx (xx=00, 01, 10, 11) and BasicModel-Subbandy (y=0,1), together with the aggregation method of BasicModel-Aggx (x=0, 1). Herein, BasicModel-Agg0 indicates to perform the continuous aggregation, and BasicModel-Agg1 indicates to perform the non-continuous aggregation. For a downlink MIMO system, when the network device configures a certain number of antenna ports and sub-band resources for the terminal device, the network device will indicate the CSI encoder model basic unit that the terminal needs to select, that is, BasicModel-Portxx and BasicModel-Subbandy, via a downlink signaling, such as the DCI or the dedicated model selecting downlink signaling. At the same time, the network side indicates the terminal to perform the continuous aggregation BasicModel-Agg0 or the non-continuous aggregation BasicModel-Agg1 by BasicModel-Aggx (x=0, 1), and the terminal selects and matches the configured aggregation method of antenna ports and sub-band resources, according to the indication of the model basic unit. The above procedure is shown in FIG. 15.

It needs to be noted that under the asymmetric aggregation, the model aggregation order at the network side and the terminal side needs to be matched according to a certain rule: under the asymmetric aggregation, the network side defaults that the CSI encoders at the terminal side are aggregated in descending order according to selecting the xx index corresponding to BasicModel-Portxx, and then aggregated in descending order according to the y index corresponding to BasicModel-Subbandy. For example, in a case of a configuration of (N1, N2) = (12, 1) antenna ports and 5 sub-bands, a first part sub-bitstream of the bitstream fed back by the terminal is a sub-bitstream fed back by an encoder of a basic model unit corresponding to BasicModel-Port11 and BaiscModel-Subband4, a second part sub-bitstream is a sub-bitstream fed back by an encoder of a basic model unit of BasicModel-Port11 and BaiscModel-Subband1, a third part is sub-bitstreams fed back by encoders of 2 basic model units of 2 segments of BasicModel-Port00, and BaiscModel-Subband4, and a fourth part is 4 segments of sub-bitstreams fed back by encoders of 2 basic model units of 2 segments of BasicModel-Port00, BasicModel-Port11 and BaiscModel-Subband1.

Therefore, in the embodiments of the present application, the encoding network is formed by aggregating K encoding units, and the decoding network is formed by aggregating K decoding units, and the K encoding units correspond to the K decoding units one by one. The input of the encoding unit of the K encoding units is a sub-matrix or sub-vector of the target channel information in the first dimension and/or the second dimension, the input of the decoding unit of the K decoding units is a sub-bitstream output by the corresponding encoding unit, the output of the decoding unit of the K decoding units is a sub-matrix or sub-vector of the target channel information in the first dimension and/or the second dimension, and finally, the target channel information may be obtained by the sub-matrices or sub-vectors output by the K decoding units. That is, through the above technical solutions, the CSI feedback can support a flexible configuration of antenna ports and sub-bands, and may achieve flexible adaptation to configurations of different transmitting antenna ports and different sub-bands, and there is no need to construct large data sets and train a corresponding model for each configuration of antenna ports and sub-bands. In the embodiments of the present application, only encoding units and decoding units with a few configurations of antenna ports and sub-bands need to be constructed, and a variety of configurations of antenna ports and sub-bands may be combined, by forming the encoding network by aggregating the encoding units and forming the decoding network by aggregating the decoding units.

Furthermore, the present application designs the basic model unit in the CSI autoencoder and proposes the model aggregation method, to construct the encoding network and the decoding network for the CSI feedback. So, the Al-based CSI feedback can support a flexible configuration of antenna ports and sub-bands. By using the solutions of the present application, there is no need to construct large data sets and train a corresponding model for each configuration of antenna ports and sub-bands. Only basic model units with a few configurations of antenna ports and sub-bands need to be constructed, and a variety of configurations of antenna ports and sub-bands may be combined, through the aggregation of the basic model units.

Furthermore, the embodiments of the present application support the flexible aggregation method and effectively utilize the correlation of the spatial domain and the frequency domain. The present application proposes a variety of aggregation methods including the continuous aggregation, the non-continuous aggregation, the symmetric aggregation, the asymmetric aggregation, etc. Herein, since the continuous aggregation has a relatively simple division of spatial domain and frequency domain resources, the solutions of the present application support the use of the symmetric aggregation method and the asymmetric aggregation method by the continuous aggregation, this flexible aggregation design enables the use of basic model units to construct more CSI encoder groups and decoder groups with different configurations of antenna ports and sub-bands. And, the non-continuous aggregation can divide the antenna port and sub-band resource dimensions at intervals, thereby effectively utilizing the correlation of a wider range of the spatial domain and the frequency domain, compressing the CSI feedback overhead and improving the CSI feedback performance. By providing the above-mentioned multiple aggregation methods, the present application enables the network side and the terminal side to construct different basic model units based on the configurations of antenna ports and sub-bands, and match an appropriate aggregation method, to better exploit the potential of AI for CSI feedback tasks.

Furthermore, fast model selecting and model switching are supported by the embodiments of the present application. A signaling procedure of the model selecting and the model switching that supports different configurations of antenna ports and sub-bands is designed in the solutions of the present application, and the CSI encoder basic model unit and the corresponding aggregation method required by the terminal are indicated by {BasicModel-Port, BasicModel-Subband, BasicModel-Agg}. By the group of signaling indications, fast model switching can be achieved according to the configuration of antenna ports and sub-bands.

The method embodiments of the present application are described in detail above with reference to FIG. 3 to FIG. 15, and apparatus embodiments of the present application are described in detail below with reference to FIG. 16 to FIG. 20, and it should be understood that the apparatus embodiments and the method embodiments correspond to each other and the similar description may refer to the method embodiments.

FIG. 16 shows a schematic block diagram of a transmitting device 300, according to the embodiments of the present application. As shown in FIG. 16, the transmitting device 300 includes:
a processing unit 310, configured to encode target channel information through an encoding network, to obtain a target bitstream; and
a communication unit 320, configured to transmit the target bitstream to a receiving device;
where the encoding network is formed by aggregating K encoding units, the target bit stream includes K sub-bitstreams outputted by the K encoding units respectively, K is a positive integer, and K^2;
where the target channel information is a channel state information (CSI) matrix, and an input of an encoding unit of the K encoding units is a sub-matrix of the target channel information in a first dimension and/or a second dimension; or, the target channel information is a CSI vector, and an input of an encoding unit of the K encoding units is a sub-vector of the target channel information in a first dimension and/or a second dimension; the first dimension is a number of transmitting antenna ports and the second dimension is a number of sub-bands.

In some embodiments, in a case where the target channel information is the CSI matrix, the encoding unit of the K encoding units obtains a sub-bitstream by extracting spatial domain correlation between antenna ports and/or frequency domain correlation between sub-bands within an input sub-matrix; or
in a case where the target channel information is the CSI vector, the encoding unit of the K encoding units obtains a sub-bitstream by extracting spatial domain correlation between antenna ports and/or frequency domain correlation between sub-bands within an input sub-vector.

In some embodiments, in a case where the target channel information is the CSI matrix, the sub-matrix corresponding to the encoding unit of the K encoding units is determined based on a continuous aggregation method, or the sub-matrix corresponding to the encoding unit of the K encoding units is determined based on a non-continuous aggregation method.

In some embodiments, in a case where the sub-matrix corresponding to the encoding unit of the K encoding units is determined based on the continuous aggregation method, the sub-matrix corresponding to the encoding unit of the K encoding units occupies a continuous part of the target channel information in the first dimension and/or the second dimension.

In some embodiments, in a case where the sub-matrix corresponding to the encoding unit of the K encoding units is determined based on the non-continuous aggregation method, the sub-matrix corresponding to the encoding unit of the K encoding units occupies a non-continuous part of the target channel information in the first dimension and/or the second dimension.

In some embodiments, sub-matrices corresponding to different encoding units of the K encoding units have a same size in the first dimension and the second dimension.

In some embodiments, the target channel information is the CSI matrix with the first dimension of M and the second dimension of N, M and N are both positive integers;
where a size of a sub-matrix corresponding to each encoding unit of the K encoding units in the first dimension is *M*/*K,* and a size of a sub-matrix corresponding to each encoding unit of the K encoding units in the second dimension is *N*/*K.*

In some embodiments, sub-matrices corresponding to some or all of the K encoding units have different sizes in the first dimension and/or the second dimension.

In some embodiments, in a case where the target channel information is the CSI vector, the sub-vector corresponding to the encoding unit of the K encoding units is determined based on a continuous aggregation method, or the sub-vector corresponding to the encoding unit of the K encoding units is determined based on a non-continuous aggregation method.

In some embodiments, in a case where the sub-vector corresponding to the encoding unit of the K encoding units is determined based on the continuous aggregation method, the sub-vector corresponding to the encoding unit of the K encoding units occupies a continuous part of the target channel information in the first dimension and/or the second dimension.

In some embodiments, in a case where the sub-vector corresponding to the encoding unit of the K encoding units is determined based on the non-continuous aggregation method, the sub-vector corresponding to the encoding unit of the K encoding units occupies a non-continuous part of the target channel information in the first dimension and/or the second dimension.

In some embodiments, sub-vectors corresponding to different encoding units of the K encoding units have a same size in the first dimension and the second dimension.

In some embodiments, the target channel information is the CSI vector with the first dimension of M and the second dimension of N, M and N are both positive integers;
where a size of a sub-vector corresponding to each encoding unit of the K encoding units in the first dimension is *M*/*K,* and a size of a sub-vector corresponding to each encoding unit of the K encoding units in the second dimension is *N*/*K.*

In some embodiments, sub-vectors corresponding to some or all of the K encoding units have different sizes in the first dimension and/or the second dimension.

In some embodiments, a structure and a parameter of each of the K encoding units are the same.

In some embodiments, the communication unit 320 is further configured to receive a first signaling transmitted by the receiving device; where the first signaling includes first indication information, second indication information and third indication information, the first indication information is used to indicate at least one antenna port basic model in the first dimension, the at least one antenna port basic model is used by the transmitting device to determine an aggregation method in the first dimension, the second indication information is used to indicate at least one sub-band basic model in the second dimension, the at least one sub-band basic model is used by the transmitting device to determine an aggregation method in the second dimension, the third indication information is used to indicate an aggregation basic model, and the aggregation basic model is used by the transmitting device to determine to perform continuous aggregation or non-continuous aggregation;
the processing unit 310 is further configured to determine to form the encoding network by aggregating the K encoding units, according to the first indication information, the second indication information and the third indication information.

In some embodiments, in a case where sub-matrices or sub-vectors corresponding to some or all of the K encoding units have different sizes in the first dimension and/or the second dimension, the encoding unit of the K encoding units is first aggregated in descending order according to an antenna port index corresponding to the at least one antenna port basic model, and then aggregated in descending order according to a sub-band index corresponding to the at least one sub-band basic model.

In some embodiments, the above communication unit may be a communication interface or a transceiver, or an input and output interface of a communication chip or a system-on-chip. The above processing unit may be one or more processors.

It should be understood that the transmitting device 300 according to the embodiments of the present application may correspond to the transmitting device in the method embodiments of the present application, and the above and other operations and/or functions of various units in the transmitting device 300 are respectively to implement the corresponding procedures of the transmitting device in the method 200 for channel information feedback shown in FIG. 3 to FIG. 15, which will not be repeated here for the sake of brevity.

FIG. 17 shows a schematic block diagram of a receiving device 400, according to the embodiments of the present application. As shown in FIG. 17, the receiving device 400 includes:
a communication unit 410, configured to receive a target bitstream transmitted by a transmitting device, where the target bitstream includes K sub-bitstreams output by K encoding units respectively; and
a processing unit 420, configured to decode the target bitstream through a decoding network, to obtain target channel information;
where the decoding network is formed by aggregating K decoding units, the K decoding units correspond to the K encoding units respectively, and an input of a decoding unit of the K decoding units is a sub-bitstream output by a corresponding encoding unit, K is a positive integer, and K^2;
where the target channel information is a channel state information (CSI) matrix, and an output of the decoding unit of the K decoding units is a sub-matrix of the target channel information in a first dimension and/or a second dimension; or, the target channel information is a CSI vector, and an output of the decoding unit of the K decoding units is a sub-vector of the target channel information in a first dimension and/or a second dimension; the first dimension is a number of transmitting antenna ports, and the second dimension is a number of sub-bands.

In some embodiments, in a case where the target channel information is the CSI matrix, the decoding unit of the K decoding units obtains the sub-matrix by extracting spatial domain correlation between antenna ports and/or frequency domain correlation between sub-bands within an input sub-bitstream; or
in a case where the target channel information is the CSI vector, the decoding unit of the K decoding units obtains the sub-vector by extracting spatial domain correlation between antenna ports and/or frequency domain correlation between sub-bands within an input sub-bitstream.

In some embodiments, the sub-matrix corresponding to the decoding unit of the K decoding units occupies a continuous part of the target channel information in the first dimension and/or the second dimension.

In some embodiments, the sub-matrix corresponding to the decoding unit of the K decoding units occupies a non-continuous part of the target channel information in the first dimension and/or the second dimension.

In some embodiments, sub-vectors corresponding to different decoding units of the K decoding units have a same size in the first dimension and the second dimension.

In some embodiments, the target channel information is the CSI matrix with the first dimension of M and the second dimension of N, M and N are both positive integers;
where a size of a sub-matrix corresponding to each decoding unit of the K decoding units in the first dimension is *M*/*K,* and a size of a sub-matrix corresponding to each decoding unit of the K decoding units in the second dimension is *N*/*K.*

In some embodiments, sub-matrices corresponding to some or all of the K decoding units have different sizes in the first dimension and/or the second dimension.

In some embodiments, the sub-vector corresponding to the decoding unit of the K decoding units occupies a continuous part of the target channel information in the first dimension and/or the second dimension.

In some embodiments, the sub-vector corresponding to the decoding unit of the K decoding units occupies a non-continuous part of the target channel information in the first dimension and/or the second dimension.

In some embodiments, sub-vectors corresponding to different decoding units of the K decoding units have a same size in the first dimension and the second dimension.

In some embodiments, the target channel information is the CSI vector with the first dimension of M and the second dimension of N, M and N are both positive integers;
where a size of a sub-vector corresponding to each decoding unit of the K decoding units in the first dimension is *M*/*K,* and a size of a sub-vector corresponding to each decoding unit of the K decoding units in the second dimension is *N*/*K.*

In some embodiments, sub-vectors corresponding to some or all of the K decoding units have different sizes in the first dimension and/or the second dimension.

In some embodiments, a structure and a parameter of each of the K decoding units are the same.

In some embodiments, the communication unit 410 is further configured to transmit a first signaling to the transmitting device; where the first signaling includes first indication information, second indication information and third indication information, the first indication information is used to indicate at least one antenna port basic model in the first dimension, the at least one antenna port basic model is used by the transmitting device to determine an aggregation method in the first dimension, the second indication information is used to indicate at least one sub-band basic model in the second dimension, the at least one sub-band basic model is used by the transmitting device to determine an aggregation method in the second dimension, the third indication information is used to indicate an aggregation basic model, and the aggregation basic model is used by the transmitting device to determine to perform continuous aggregation or non-continuous aggregation.

In some embodiments, in a case where sub-matrices or sub-vectors corresponding to some or all of the K decoding units have different sizes in the first dimension and/or the second dimension, the decoding unit of the K decoding units first splits the target bitstream in descending order according to an antenna port index corresponding to the at least one antenna port basic model, and then splits the target bitstream in descending order according to a sub-band index corresponding to the at least one sub-band basic model.

In some embodiments, the above communication unit may be a communication interface or a transceiver, or an input and output interface of a communication chip or a system-on-chip. The above processing unit may be one or more processors.

It should be understood that the receiving device 400 according to the embodiments of the present application may correspond to the receiving device in the method embodiments of the present application, and the above and other operations and/or functions of various units in the receiving device 400 are respectively to implement the corresponding procedures of the receiving device in the method 200 for channel information feedback shown in FIG. 3 to FIG. 15, which will not be repeated here for the sake of brevity.

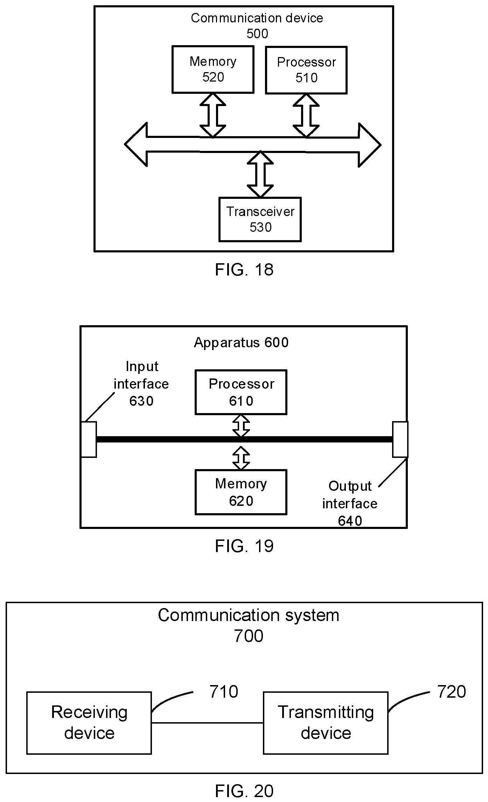

FIG. 18 is a schematic structural diagram of a communication device 500, provided by the embodiments of the present application. The communication device 500 shown in FIG. 18 includes a processor 510, and the processor 510 may invoke and execute a computer program from a memory to implement the method in the embodiments of the present application.

In some embodiments, as shown in FIG.18, the communication device 500 further includes a memory 520. Herein, the processor 510 may invoke and execute a computer program from the memory 520 to implement the method in the embodiments of the present application.

Herein, the memory 520 may be a separate device independent from the processor 510, or may also be integrated into the processor 510.

In some embodiments, as shown in FIG. 18, the communication device 500 may also include a transceiver 530, and the processor 510 may control the transceiver 530 to communicate with other devices, and specifically, to transmit information or data to other devices, or receive information or data transmitted by other devices.

Herein, the transceiver 530 may include a transmitter and a receiver. The transceiver 530 may further include antennas, and the number of antennas may be one or more.

In some embodiments, the communication device 500 may specifically be the transmitting device of the embodiments of the present application, and the communication device 500 may implement the corresponding procedures implemented by the transmitting device in the various methods of the embodiments of the present application, which will not be repeated here for the sake of brevity.

In some embodiments, the communication device 500 may specifically be the receiving device of the embodiments of the present application, and the communication device 500 may implement the corresponding procedures implemented by the receiving device in the various methods of the embodiments of the present application, which will not be repeated here for the sake of brevity.

FIG. 19 is a schematic structural diagram of an apparatus of the embodiments of the present application. The apparatus 600 shown in FIG. 19 includes a processor 610, the processor 610 may invoke and execute a computer program from a memory to implement the method in the embodiments of the present application.

In some embodiments, as shown in FIG. 19, the apparatus 600 may further include a memory 620. Herein, the processor 610 may invoke and execute a computer program from the memory 620 to implement the method in the embodiments of the present application.

Herein, the memory 620 may be a separate device independent from the processor 610, or may also be integrated into the processor 610.

In some embodiments, the apparatus 600 may further include an input interface 630. Herein, the processor 610 may control the input interface 630 to communicate with other devices or chips, and specifically, to acquire information or data transmitted by other devices or chips.

In some embodiments, the apparatus 600 may further include an output interface 640. Herein, the processor 610 may control the output interface 640 to communicate with other devices or chips, and specifically, to output information or data to other devices or chips.

In some embodiments, the apparatus may be applied to the transmitting device in the embodiments of the present application, and the apparatus may implement the corresponding procedure implemented by the transmitting device in the various methods of the embodiments of the present application, which will not be repeated here for the sake of brevity.

In some embodiments, the apparatus may be applied to the receiving device in the embodiments of the present application, and the apparatus may implement the corresponding procedure implemented by the receiving device in the various methods of the embodiments of the present application, which will not be repeated here for the sake of brevity.

In some embodiments, the apparatus mentioned in the embodiments of the present application may also be a chip. For example, it may be a system on chip, a system chip, a chip system or a system-on-chip chip, etc.

FIG. 20 is a schematic block diagram of a communication system 700, provided by the embodiments of the present application. As shown in FIG. 20, the communication system 700 includes a receiving device 710 and a transmitting device 720.

Herein, the receiving device 710 may be configured to implement the corresponding functions implemented by the receiving device in the above method, and the transmitting device 720 may be configured to implement the corresponding functions implemented by the transmitting device in the above method, which will not be repeated here for the sake of brevity.

It should be understood that the processor in the embodiments of the present application may be an integrated circuit chip and have a processing capability of signals. In the implementation process, various steps of the above method embodiments may be completed by an integrated logic circuit of hardware in the processor or an instruction in a software form. The above processor may be a general-purpose processor, a Digital Signal Processor (DSP), an Application Specific Integrated Circuit (ASIC), a Field Programmable Gate Array (FPGA) or other programmable logic devices, a discrete gate or transistor logic device, a discrete hardware component. Various methods, steps and logical block diagrams disclosed in the embodiments of the present application may be implemented or performed. A general-purpose processor may be a microprocessor, or the processor may also be any conventional processor, etc. The steps of the method disclosed in combination with the embodiments of the present application may be directly embodied as being performed and completed by a hardware decoding processor, or by using a combination of hardware and software modules in the decoding processor. The software module may be located in the mature storage medium in the art such as the random memory, the flash memory, the read-only memory, the programmable read-only memory or electrically erasable programmable memory, the register. The storage medium is located in the memory, and the processor reads the information in the memory and completes the steps of the above methods in combination with its hardware.

It may be understood that the memory in the embodiments of the present application may be a volatile memory or a non-volatile memory, or may include both volatile and non-volatile memories. Herein, the non-volatile memory may be a Read-Only Memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a Random Access Memory (RAM), which is used as an external cache. Through illustrative, rather than limiting, illustration, many forms of RAMs are available, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct rambus random access memory (Direct Rambus RAM, DR RAM). It should be noted that the memory of the system and the method described herein is intended to include, but not limited to, these and any other suitable types of memories.

It should be understood that the above memory is exemplary but not limiting illustration, e.g., the memory in embodiments of the present application may also be a static Random Access Memory (static RAM, SRAM), a Dynamic Random Access Memory (dynamic RAM, DRAM), a synchronous DRAM (SDRAM), a double data rate SDRAM (DDR SDRAM), an enhanced SDRAM (ESDRAM), a synch link DRAM (SLDRAM), and a Direct Rambus RAM (DR RAM), etc. That is, the memory in the embodiments of the present application is intended to include, but not limited to, these and any other suitable types of memories.

The embodiments of the present application further provide a computer readable storage medium for storing a computer program.

In some embodiments, the computer readable storage medium may be applied to the transmitting device in the embodiments of the present application, and the computer program causes a computer to perform the corresponding procedure implemented by the transmitting device in the various methods of the embodiments of the present application, which will not be repeated here for the sake of brevity.

In some embodiments, the computer readable storage medium may be applied to the receiving device in the embodiments of the present application, and the computer program causes a computer to perform the corresponding procedure implemented by the receiving device in various methods of the embodiments of the present application, which will not be repeated here for the sake of brevity.

The embodiments of the present application further provide a computer program product including a computer program instruction.

In some embodiments, the computer program product may be applied to the transmitting device in the embodiments of the present application, and the computer program instruction causes a computer to perform the corresponding procedure implemented by the transmitting device in the various methods of the embodiments of the present application, which will not be repeated here for the sake of brevity.

In some embodiments, the computer program product may be applied to the receiving device in the embodiments of the present application, and the computer program instruction causes a computer to perform the corresponding procedure implemented by the receiving device in various methods of the embodiments of the present application, which will not be repeated here for the sake of brevity.

The embodiments of the present application further provide a computer program.

In some embodiments, the computer program may be applied to the transmitting device in the embodiments of the present application, the computer program when being executed on a computer, causes the computer to perform the corresponding procedure implemented by the transmitting device in various methods of the embodiments of the present application, which will not be repeated here for the sake of brevity.

In some embodiments, the computer program may be applied to the receiving device in the embodiments of the present application, the computer program when being executed on a computer, causes the computer to perform the corresponding procedure implemented by the receiving device in various methods of the embodiments of the present application, which will not be repeated here for the sake of brevity.

Those ordinary skilled in the art may realize that units and algorithm steps of the examples described in combination with the embodiments disclosed herein can be implemented in electronic hardware or in a combination of computer software and electronic hardware. Whether these functions are performed by way of hardware or software depends on a specific application and a design constraint of the technical solution. A skilled person may use different methods for each specific application, to implement the described functions, but such implementation should not be considered beyond the scope of the present application.

It may be clearly understood by those skilled in the art that, for convenience and brevity of the description, the specific working procedures of the system, the apparatus and the unit described above may refer to the corresponding procedures in the above method embodiments, which will not be repeated here.

In the several embodiments provided by the application, it should be understood that, the disclosed systems, apparatus, and method may be implemented in other ways. For example, the apparatus embodiments described above are only schematic, for example, division of the units is only division of logical functions, and there may be other division methods in an actual implementation, for example, a plurality of units or components may be combined or integrated into another system, or some features may be ignored or not performed. On the other hand, the coupling or direct coupling or communicative connection between each other as shown or discussed may be indirect coupling or communicative connection of apparatus or units via some interfaces, which may be electrical, mechanical, or in other forms.

The units illustrated as separate components may be or may not be physically separated, and the components shown as units may be or may not be physical units, that is, they may be located in one place, or may be distributed onto a plurality of network units. A part or all of the units may be selected according to actual needs, to implement the purpose of the schemes of the embodiments.

In addition, the various functional units in the various embodiments of the present application may be integrated into one processing unit, or the various units may exist physically separately, or two or more units may be integrated into one unit.

If the described functions are implemented in a form of a software functional unit and sold or used as an independent product, they may be stored in a computer readable storage medium. For this understanding, the technical solution of the present application essentially, or a part of the technical solution that contributes to the prior art, or a part of the technical solution, may be embodied in a form of a software product, and the computer software product is stored in a storage medium, and includes a plurality of instructions for enabling a computer device (which may be a personal computer, a server, or a network device, etc.) to perform all or some of steps of the methods described in the various embodiments of the present application. And, the storage medium mentioned above includes a USB flash drive (U disk), a mobile hard disk, a Read-Only Memory (ROM), a Random Access Memory (RAM), a diskette, or an optical disk, and various mediums that may store program codes.

The above content is only specific implementations of the present application, but the protection scope of the present application is not limited thereto, and any skilled familiar with this technical field may easily think of changes or substitutions within the technical scope disclosed in the present application, which should be all covered within the protection scope of the present application. Therefore, the protection scope of the present application should be subject to the protection scope of the claims.

## Claims

1. A method for channel information feedback, comprising:
encoding by a transmitting device, target channel information through an encoding network, to obtain a target bitstream; and
transmitting by the transmitting device, the target bitstream to a receiving device;
wherein the encoding network is formed by aggregating K encoding units, the target bit stream comprises K sub-bitstreams outputted by the K encoding units respectively, K is a positive integer, and K≥2;
wherein the target channel information is a channel state information (CSI) matrix, and an input of an encoding unit of the K encoding units is a sub-matrix of the target channel information in a first dimension and/or a second dimension; or, the target channel information is a CSI vector, and an input of an encoding unit of the K encoding units is a sub-vector of the target channel information in a first dimension and/or a second dimension; the first dimension is a number of transmitting antenna ports and the second dimension is a number of sub-bands.

2. The method according to claim 1, wherein
in a case where the target channel information is the CSI matrix, the encoding unit of the K encoding units obtains a sub-bitstream by extracting spatial domain correlation between antenna ports and/or frequency domain correlation between sub-bands within an input sub-matrix; or
in a case where the target channel information is the CSI vector, the encoding unit of the K encoding units obtains a sub-bitstream by extracting spatial domain correlation between antenna ports and/or frequency domain correlation between sub-bands within an input sub-vector.

3. The method according to claim 1 or 2, wherein
in a case where the target channel information is the CSI matrix, the sub-matrix corresponding to the encoding unit of the K encoding units is determined based on a continuous aggregation method, or the sub-matrix corresponding to the encoding unit of the K encoding units is determined based on a non-continuous aggregation method.

4. The method according to claim 3, wherein in a case where the sub-matrix corresponding to the encoding unit of the K encoding units is determined based on the continuous aggregation method, the sub-matrix corresponding to the encoding unit of the K encoding units occupies a continuous part of the target channel information in the first dimension and/or the second dimension.

5. The method according to claim 3, wherein in a case where the sub-matrix corresponding to the encoding unit of the K encoding units is determined based on the non-continuous aggregation method, the sub-matrix corresponding to the encoding unit of the K encoding units occupies a non-continuous part of the target channel information in the first dimension and/or the second dimension.

6. The method according to claim 4 or 5, wherein sub-matrices corresponding to different encoding units of the K encoding units have a same size in the first dimension and the second dimension.

7. The method according to claim 6, wherein
the target channel information is the CSI matrix with the first dimension of M and the second dimension of N, M and N are both positive integers;
wherein a size of a sub-matrix corresponding to each encoding unit of the K encoding units in the first dimension is *M*/*K,* and a size of a sub-matrix corresponding to each encoding unit of the K encoding units in the second dimension is *N*/*K.*

8. The method according to claim 4, wherein sub-matrices corresponding to some or all of the K encoding units have different sizes in the first dimension and/or the second dimension.

9. The method according to claim 1 or 2, wherein
in a case where the target channel information is the CSI vector, the sub-vector corresponding to the encoding unit of the K encoding units is determined based on a continuous aggregation method, or the sub-vector corresponding to the encoding unit of the K encoding units is determined based on a non-continuous aggregation method.

10. The method according to claim 9, wherein in a case where the sub-vector corresponding to the encoding unit of the K encoding units is determined based on the continuous aggregation method, the sub-vector corresponding to the encoding unit of the K encoding units occupies a continuous part of the target channel information in the first dimension and/or the second dimension.

11. The method according to claim 9, wherein in a case where the sub-vector corresponding to the encoding unit of the K encoding units is determined based on the non-continuous aggregation method, the sub-vector corresponding to the encoding unit of the K encoding units occupies a non-continuous part of the target channel information in the first dimension and/or the second dimension.

12. The method according to claim 10 or 11, wherein sub-vectors corresponding to different encoding units of the K encoding units have a same size in the first dimension and the second dimension.

13. The method according to claim 12, wherein
the target channel information is the CSI vector with the first dimension of M and the second dimension of N, M and N are both positive integers;
wherein a size of a sub-vector corresponding to each encoding unit of the K encoding units in the first dimension is *M*/*K,* and a size of a sub-vector corresponding to each encoding unit of the K encoding units in the second dimension is *N*/*K.*

14. The method according to claim 10, wherein sub-vectors corresponding to some or all of the K encoding units have different sizes in the first dimension and/or the second dimension.

15. The method according to claim 6, 7, 12 or 13, wherein a structure and a parameter of each of the K encoding units are the same.

16. The method according to any one of claims 1 to 15, further comprising:
receiving by the transmitting device, a first signaling transmitted by the receiving device; wherein the first signaling comprises first indication information, second indication information and third indication information, the first indication information is used to indicate at least one antenna port basic model in the first dimension, the at least one antenna port basic model is used by the transmitting device to determine an aggregation method in the first dimension, the second indication information is used to indicate at least one sub-band basic model in the second dimension, the at least one sub-band basic model is used by the transmitting device to determine an aggregation method in the second dimension, the third indication information is used to indicate an aggregation basic model, and the aggregation basic model is used by the transmitting device to determine to perform continuous aggregation or non-continuous aggregation;
determining by the transmitting device, to form the encoding network by aggregating the K encoding units, according to the first indication information, the second indication information and the third indication information.

17. The method according to claim 16, wherein in a case where sub-matrices or sub-vectors corresponding to some or all of the K encoding units have different sizes in the first dimension and/or the second dimension, the encoding unit of the K encoding units is first aggregated in descending order according to an antenna port index corresponding to the at least one antenna port basic model, and then aggregated in descending order according to a sub-band index corresponding to the at least one sub-band basic model.

18. A method for channel information feedback, comprising:
receiving by a receiving device, a target bitstream transmitted by a transmitting device, wherein the target bitstream comprises K sub-bitstreams output by K encoding units respectively; and
decoding by the receiving device, the target bitstream through a decoding network, to obtain target channel information;
wherein the decoding network is formed by aggregating K decoding units, the K decoding units correspond to the K encoding units respectively, and an input of a decoding unit of the K decoding units is a sub-bitstream output by a corresponding encoding unit, K is a positive integer, and K^2;
wherein the target channel information is a channel state information (CSI) matrix, and an output of the decoding unit of the K decoding units is a sub-matrix of the target channel information in a first dimension and/or a second dimension; or, the target channel information is a CSI vector, and an output of the decoding unit of the K decoding units is a sub-vector of the target channel information in a first dimension and/or a second dimension; the first dimension is a number of transmitting antenna ports, and the second dimension is a number of sub-bands.

19. The method according to claim 18, wherein
in a case where the target channel information is the CSI matrix, the decoding unit of the K decoding units obtains the sub-matrix by extracting spatial domain correlation between antenna ports and/or frequency domain correlation between sub-bands within an input sub-bitstream; or
in a case where the target channel information is the CSI vector, the decoding unit of the K decoding units obtains the sub-vector by extracting spatial domain correlation between antenna ports and/or frequency domain correlation between sub-bands within an input sub-bitstream.

20. The method according to claim 18 or 19, wherein
the sub-matrix corresponding to the decoding unit of the K decoding units occupies a continuous part of the target channel information in the first dimension and/or the second dimension.

21. The method according to claim 18 or 19, wherein
the sub-matrix corresponding to the decoding unit of the K decoding units occupies a non-continuous part of the target channel information in the first dimension and/or the second dimension.

22. The method according to claim 20 or 21, wherein sub-vectors corresponding to different decoding units of the K decoding units have a same size in the first dimension and the second dimension.

23. The method according to claim 22, wherein
the target channel information is the CSI matrix with the first dimension of M and the second dimension of N, M and N are both positive integers;
wherein a size of a sub-matrix corresponding to each decoding unit of the K decoding units in the first dimension is *M*/*K,* and a size of a sub-matrix corresponding to each decoding unit of the K decoding units in the second dimension is *N*/*K.*

24. The method according to claim 20, wherein sub-matrices corresponding to some or all of the K decoding units have different sizes in the first dimension and/or the second dimension.

25. The method according to claim 18 or 19, wherein
the sub-vector corresponding to the decoding unit of the K decoding units occupies a continuous part of the target channel information in the first dimension and/or the second dimension.

26. The method according to claim 18 or 19, wherein
the sub-vector corresponding to the decoding unit of the K decoding units occupies a non-continuous part of the target channel information in the first dimension and/or the second dimension.

27. The method according to claim 25 or 26, wherein sub-vectors corresponding to different decoding units of the K decoding units have a same size in the first dimension and the second dimension.

28. The method according to claim 27, wherein
the target channel information is the CSI vector with the first dimension of M and the second dimension of N, M and N are both positive integers;
wherein a size of a sub-vector corresponding to each decoding unit of the K decoding units in the first dimension is *M*/*K,* and a size of a sub-vector corresponding to each decoding unit of the K decoding units in the second dimension is *N*/*K.*

29. The method according to claim 28, wherein sub-vectors corresponding to some or all of the K decoding units have different sizes in the first dimension and/or the second dimension.

30. The method according to claim 22, 23, 27 or 28, wherein a structure and a parameter of each of the K decoding units are the same.

31. The method according to any one of claims 18 to 30, further comprising:
transmitting by the receiving device, a first signaling to the transmitting device; wherein the first signaling comprises first indication information, second indication information and third indication information, the first indication information is used to indicate at least one antenna port basic model in the first dimension, the at least one antenna port basic model is used by the transmitting device to determine an aggregation method in the first dimension, the second indication information is used to indicate at least one sub-band basic model in the second dimension, the at least one sub-band basic model is used by the transmitting device to determine an aggregation method in the second dimension, the third indication information is used to indicate an aggregation basic model, and the aggregation basic model is used by the transmitting device to determine to perform continuous aggregation or non-continuous aggregation.

32. The method according to claim 31, wherein in a case where sub-matrices or sub-vectors corresponding to some or all of the K decoding units have different sizes in the first dimension and/or the second dimension, the decoding unit of the K decoding units first splits the target bitstream in descending order according to an antenna port index corresponding to the at least one antenna port basic model, and then splits the target bitstream in descending order according to a sub-band index corresponding to the at least one sub-band basic model.

33. A transmitting device, comprising:
a processing unit, configured to encode target channel information through an encoding network, to obtain a target bitstream; and
a communication unit, configured to transmit the target bitstream to a receiving device;
wherein the encoding network is formed by aggregating K encoding units, the target bit stream comprises K sub-bitstreams outputted by the K encoding units respectively, K is a positive integer, and K≥2;
wherein the target channel information is a channel state information (CSI) matrix, and an input of an encoding unit of the K encoding units is a sub-matrix of the target channel information in a first dimension and/or a second dimension; or, the target channel information is a CSI vector, and an input of an encoding unit of the K encoding units is a sub-vector of the target channel information in a first dimension and/or a second dimension; the first dimension is a number of transmitting antenna ports and the second dimension is a number of sub-bands.

34. The transmitting device according to claim 33, wherein
in a case where the target channel information is the CSI matrix, the encoding unit of the K encoding units obtains a sub-bitstream by extracting spatial domain correlation between antenna ports and/or frequency domain correlation between sub-bands within an input sub-matrix; or
in a case where the target channel information is the CSI vector, the encoding unit of the K encoding units obtains a sub-bitstream by extracting spatial domain correlation between antenna ports and/or frequency domain correlation between sub-bands within an input sub-vector.

35. The transmitting device according to claim 33 or 34, wherein
in a case where the target channel information is the CSI matrix, the sub-matrix corresponding to the encoding unit of the K encoding units is determined based on a continuous aggregation method, or the sub-matrix corresponding to the encoding unit of the K encoding units is determined based on a non-continuous aggregation method.

36. The transmitting device according to claim 35, wherein in a case where the sub-matrix corresponding to the encoding unit of the K encoding units is determined based on the continuous aggregation method, the sub-matrix corresponding to the encoding unit of the K encoding units occupies a continuous part of the target channel information in the first dimension and/or the second dimension.

37. The transmitting device according to claim 35, wherein in a case where the sub-matrix corresponding to the encoding unit of the K encoding units is determined based on the non-continuous aggregation method, the sub-matrix corresponding to the encoding unit of the K encoding units occupies a non-continuous part of the target channel information in the first dimension and/or the second dimension.

38. The transmitting device according to claim 36 or 37, wherein sub-matrices corresponding to different encoding units of the K encoding units have a same size in the first dimension and the second dimension.

39. The transmitting device according to claim 38, wherein
the target channel information is the CSI matrix with the first dimension of M and the second dimension of N, M and N are both positive integers;
wherein a size of a sub-matrix corresponding to each encoding unit of the K encoding units in the first dimension is *M*/*K,* and a size of a sub-matrix corresponding to each encoding unit of the K encoding units in the second dimension is *N*/*K.*

40. The transmitting device according to claim 36, wherein sub-matrices corresponding to some or all of the K encoding units have different sizes in the first dimension and/or the second dimension.

41. The transmitting device according to claim 33 or 34, wherein
in a case where the target channel information is the CSI vector, the sub-vector corresponding to the encoding unit of the K encoding units is determined based on a continuous aggregation method, or the sub-vector corresponding to the encoding unit of the K encoding units is determined based on a non-continuous aggregation method.

42. The transmitting device according to claim 41, wherein in a case where the sub-vector corresponding to the encoding unit of the K encoding units is determined based on the continuous aggregation method, the sub-vector corresponding to the encoding unit of the K encoding units occupies a continuous part of the target channel information in the first dimension and/or the second dimension.

43. The transmitting device according to claim 41, wherein in a case where the sub-vector corresponding to the encoding unit of the K encoding units is determined based on the non-continuous aggregation method, the sub-vector corresponding to the encoding unit of the K encoding units occupies a non-continuous part of the target channel information in the first dimension and/or the second dimension.

44. The transmitting device according to claim 42 or 43, wherein sub-vectors corresponding to different encoding units of the K encoding units have a same size in the first dimension and the second dimension.

45. The transmitting device according to claim 44, wherein
the target channel information is the CSI vector with the first dimension of M and the second dimension of N, M and N are both positive integers;
wherein a size of a sub-vector corresponding to each encoding unit of the K encoding units in the first dimension is *M*/*K,* and a size of a sub-vector corresponding to each encoding unit of the K encoding units in the second dimension is *N*/*K.*

46. The transmitting device according to claim 42, wherein sub-vectors corresponding to some or all of the K encoding units have different sizes in the first dimension and/or the second dimension.

47. The transmitting device according to claim 38, 39, 44 or 45, wherein a structure and a parameter of each of the K encoding units are the same.

48. The transmitting device according to any one of claims 33 to 47, wherein
the communication unit is further configured to receive a first signaling transmitted by the receiving device; wherein the first signaling comprises first indication information, second indication information and third indication information, the first indication information is used to indicate at least one antenna port basic model in the first dimension, the at least one antenna port basic model is used by the transmitting device to determine an aggregation method in the first dimension, the second indication information is used to indicate at least one sub-band basic model in the second dimension, the at least one sub-band basic model is used by the transmitting device to determine an aggregation method in the second dimension, the third indication information is used to indicate an aggregation basic model, and the aggregation basic model is used by the transmitting device to determine to perform continuous aggregation or non-continuous aggregation;
the processing unit is further configured to determine to form the encoding network by aggregating the K encoding units, according to the first indication information, the second indication information and the third indication information.

49. The transmitting device according to claim 48, wherein in a case where sub-matrices or sub-vectors corresponding to some or all of the K encoding units have different sizes in the first dimension and/or the second dimension, the encoding unit of the K encoding units is first aggregated in descending order according to an antenna port index corresponding to the at least one antenna port basic model, and then aggregated in descending order according to a sub-band index corresponding to the at least one sub-band basic model.

50. A receiving device, comprising:
a communication unit, configured to receive a target bitstream transmitted by a transmitting device, wherein the target bitstream comprises K sub-bitstreams output by K encoding units respectively; and
a processing unit, configured to decode the target bitstream through a decoding network, to obtain target channel information;
wherein the decoding network is formed by aggregating K decoding units, the K decoding units correspond to the K encoding units respectively, and an input of a decoding unit of the K decoding units is a sub-bitstream output by a corresponding encoding unit, K is a positive integer, and K^2;
wherein the target channel information is a channel state information (CSI) matrix, and an output of the decoding unit of the K decoding units is a sub-matrix of the target channel information in a first dimension and/or a second dimension; or, the target channel information is a CSI vector, and an output of the decoding unit of the K decoding units is a sub-vector of the target channel information in a first dimension and/or a second dimension; the first dimension is a number of transmitting antenna ports, and the second dimension is a number of sub-bands.

51. The receiving device according to claim 50, wherein
in a case where the target channel information is the CSI matrix, the decoding unit of the K decoding units obtains the sub-matrix by extracting spatial domain correlation between antenna ports and/or frequency domain correlation between sub-bands within an input sub-bitstream; or
in a case where the target channel information is the CSI vector, the decoding unit of the K decoding units obtains the sub-vector by extracting spatial domain correlation between antenna ports and/or frequency domain correlation between sub-bands within an input sub-bitstream.

52. The receiving device according to claim 50 or 51, wherein
the sub-matrix corresponding to the decoding unit of the K decoding units occupies a continuous part of the target channel information in the first dimension and/or the second dimension.

53. The receiving device according to claim 50 or 51, wherein
the sub-matrix corresponding to the decoding unit of the K decoding units occupies a non-continuous part of the target channel information in the first dimension and/or the second dimension.

54. The receiving device according to claim 52 or 53, wherein sub-vectors corresponding to different decoding units of the K decoding units have a same size in the first dimension and the second dimension.

55. The receiving device according to claim 54, wherein
the target channel information is the CSI matrix with the first dimension of M and the second dimension of N, M and N are both positive integers;
wherein a size of a sub-matrix corresponding to each decoding unit of the K decoding units in the first dimension is *M*/*K,* and a size of a sub-matrix corresponding to each decoding unit of the K decoding units in the second dimension is *N*/*K.*

56. The receiving device according to claim 52, wherein sub-matrices corresponding to some or all of the K decoding units have different sizes in the first dimension and/or the second dimension.

57. The receiving device according to claim 50 or 51, wherein
the sub-vector corresponding to the decoding unit of the K decoding units occupies a continuous part of the target channel information in the first dimension and/or the second dimension.

58. The receiving device according to claim 50 or 51, wherein
the sub-vector corresponding to the decoding unit of the K decoding units occupies a non-continuous part of the target channel information in the first dimension and/or the second dimension.

59. The receiving device according to claim 57 or 58, wherein sub-vectors corresponding to different decoding units of the K decoding units have a same size in the first dimension and the second dimension.

60. The receiving device according to claim 59, wherein
the target channel information is the CSI vector with the first dimension of M and the second dimension of N, M and N are both positive integers;
wherein a size of a sub-vector corresponding to each decoding unit of the K decoding units in the first dimension is *M*/*K,* and a size of a sub-vector corresponding to each decoding unit of the K decoding units in the second dimension is *N*/*K.*

61. The receiving device according to claim 60, wherein sub-vectors corresponding to some or all of the K decoding units have different sizes in the first dimension and/or the second dimension.

62. The receiving device according to claim 54, 55, 59 or 60, wherein a structure and a parameter of each of the K decoding units are the same.

63. The receiving device according to any one of claims 50 to 62, wherein
the communication unit is further configured to transmit a first signaling to the transmitting device; wherein the first signaling comprises first indication information, second indication information and third indication information, the first indication information is used to indicate at least one antenna port basic model in the first dimension, the at least one antenna port basic model is used by the transmitting device to determine an aggregation method in the first dimension, the second indication information is used to indicate at least one sub-band basic model in the second dimension, the at least one sub-band basic model is used by the transmitting device to determine an aggregation method in the second dimension, the third indication information is used to indicate an aggregation basic model, and the aggregation basic model is used by the transmitting device to determine to perform continuous aggregation or non-continuous aggregation.

64. The receiving device according to claim 63, wherein in a case where sub-matrices or sub-vectors corresponding to some or all of the K decoding units have different sizes in the first dimension and/or the second dimension, the decoding unit of the K decoding units first splits the target bitstream in descending order according to an antenna port index corresponding to the at least one antenna port basic model, and then splits the target bitstream in descending order according to a sub-band index corresponding to the at least one sub-band basic model.

65. A transmitting device, comprising: a processor and a memory, wherein the memory is configured to store a computer program, the processor is configured to invoke and execute the computer program stored in the memory, to cause the transmitting device to perform the method according to any one of claims 1 to 17.

66. A receiving device, comprising: a processor and a memory, wherein the memory is configured to store a computer program, the processor is configured to invoke and execute the computer program stored in the memory, to cause the receiving device to perform the method according to any one of claims 18 to 32.

67. A chip, comprising: a processor, configured to invoke and execute a computer program from a memory, to cause a device equipped with the chip to perform the method according to any one of claims 1 to 17.

68. A chip, comprising: a processor, configured to invoke and execute a computer program from a memory, to cause a device equipped with the chip to perform the method according to any one of claims 18 to 32.

69. A computer readable storage medium, wherein the computer readable storage medium is configured to store a computer program and the computer program causes a computer to perform the method according to any one of claims 1 to 17.

70. A computer readable storage medium, wherein the computer readable storage medium is configured to store a computer program and the computer program causes a computer to perform the method according to any one of claims 18 to 32.

71. A computer program product, comprising a computer program instruction, wherein the computer program instruction causes a computer to perform the method according to any one of claims 1 to 17.

72. A computer program product, comprising a computer program instruction, wherein the computer program instruction causes a computer to perform the method according to any one of claims 18 to 32.

73. A computer program, wherein the computer program causes a computer to perform the method according to any one of claims 1 to 17.

74. A computer program, wherein the computer program causes a computer to perform the method according to any one of claims 18 to 32.
